# EUROPEAN PATENT SPECIFICATION

(11) **EP 0 846 121 B1**
(45) Date of publication and mention of the grant of the patent: **06.10.1999**
(21) Application number: 96922595.2
(22) Date of filing: 27.06.1996
(51) Int. Cl.: C07F 7/18, C07F 7/21, C08G 77/385, C08G 77/24, C08G 77/50

(54) **MOLECULAR AND OLIGOMERIC SILANE PRECURSORS TO NETWORK MATERIALS**
MOLEKULARE UND OLIGOMERE SILANVORLÄUFERVERBINDUNGEN FÜR NETZWERKMATERIALIEN
PRECURSEURS MOLECULAIRES ET OLIGOMERES AU SILANE POUR MATERIAUX A RESEAU

(30) Priority: 28.06.1995 US 600574; 14.06.1996 US 663834
(43) Date of publication of application: 10.06.1998
(73) Proprietor: E.I. DU PONT DE NEMOURS AND COMPANY, Wilmington Delaware 19898 (US)
(72) Inventor: MICHALCZYK, Michael, Joseph, Wilmington, DE 19805-2995 (US); SHARP, Kenneth, George, Landenburg, PA 19350-9357 (US)
(74) Representative: R.A. KUHNEN & P.A. WACKER
(86) International application number: PCT/US96/10960
(87) International publication number: WO 97/01565

(56) References cited:
- WO-A-94/06807
- US-A- 3 329 698
- US-A- 4 652 663
- US-A- 5 266 222

## Description

This invention concerns organosilicon compounds and in particular concerns novel molecular and oligomeric organosilicon compounds bearing fluorine atoms.

Various kinds of fluorine-bearing organosilicon compounds are known in organosilicon chemistry including, for example, simple fluorine-containing alkoxysilanes such as fluoroalkoxysilanes of the formula (R_{f}CH₂O)₄Si, wherein R_{f} = CF₃ to C₁₀F₂₁, disclosed in U.S. Patent 2,993,925;
(CF₃(CF₂)ₓCX₂CH₂CH₂O)₄Si (x = 0-4 and X = H or F) in U.S. Patent 3,491,134; and HSi(OCH₂CF₃)₃ and CH₂=CHSi(OCH₂CF₃)₃ in U.S. Patent 4,652,663.

U.S. Patent 5,378,790 describes more complex compounds, called "stars", of the formula X(SiQ₃)ₙ wherein Q is C₁ to about C₈ alkoxy, C₁ to about C₈ acyloxy, or halogen. However, a fluoroalkoxy Q is not described in this patent and processes for the preparation of precursors with a fluoroalkoxy Q are not provided.

There has also been great interest in recent years in polymers with a regular, three-dimensional, treelike structure. Such polymers are called dendrimers. These tree-like molecules are the result of a controlled repetitive growth starting from a polyfunctional core. From the core, two or more identical branches emanate, each branch containing further branch sites at its end. With successive generations a fractal, ball-like structure evolves until further growth is limited by surface congestion. While most of such polymers are wholly organic, a few organosilicon dendrimers have been prepared. D. Seyferth et al., in "Synthesis of an Organosilicon Dendrimer Containing 324 Si-H Bonds", Organometallics 1994,*13*, 2682-2690 describe starting with tetravinylsilane as a core molecule, a succession of alternate Pt-catalyzed hydrosilylations of all vinyl groups with HSiCl₃ and vinylations of all of the SiCl groups introduced with CH₂=CHMgBr in tetrahydrofuran providing a divergent synthesis of four generations of polycarbosilane dendrimers in which the Si atoms are linked by CH₂CH₂ groups. The chlorosilane of each generation was reduced with LiAlH₄ to the corresponding silicon hydride. Compounds with fluorinated ends or fluoroalkoxy or alkoxy ends are not mentioned or enabled.

Applicant has prepared novel fluorine-bearing organosilicon compounds of the "star" and "dendrimer" type and novel fluorine-bearing polysilicates which are particularly useful in nonconventional sol-gel chemistry conducted in fluorinated solvents.

### SUMMARY OF THE INVENTION

The present invention provides a compound of formula I

X(Si(OCₐH₂ₐR_{f})₃)n I

wherein:
X is at least one organic link selected from the group consisting of:
   (a) R¹ₘSiY₄₋ₘ;
   (b) ring structures 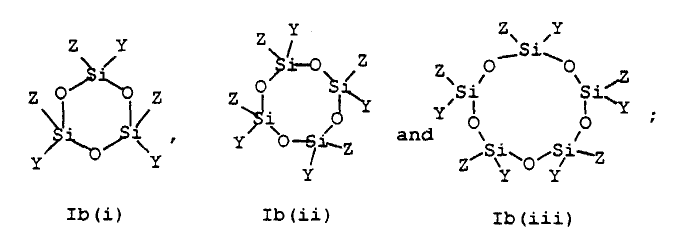
   (c) R¹ₘSi(OSi(CH₃)₂Y)₄₋ₘ;
   (d) CH₃SiY₂OSiY₂CH₃;
   (e) Y₃SiOSiY₃;
   (f) Y₂(CH₃)Si(CH₂)_{b}Si(CH₃)Y₂;
   (g) Y₃Si(CH₂)_{b}SiY₃;
   (h) Y₃SiC₆H₄SiY₃;
   (i) substituted benzene, including all isomers, selected from the group consisting of:
      (i) C₆H₃(SiZ_{3-c}Y_{c})₃;
      (ii) C₆H₂(SiZ_{3-c}Y_{c})₄;
      (iii) C₆H(SiZ_{3-c}Y_{c})₅; and
      (iv) C₆(SiZ_{3-c}Y_{c})₆; and
   (j) substituted cyclohexane, including all stereoisomers, selected from the group consisting of:
      (i) 1,2-C₆H₁₀(Y)₂; 1,3-C₆H₁₀(Y)₂; 1,4-C₆H₁₀(Y)₂;
      (ii) 1,2,4-C₆H₉(Y)₃; 1,2,3-C₆H₉(Y)₃; 1,3,5-C₆H₉(Y)₃;
      (iii) 1,2,3,4-C₆H₈(Y)₄; 1,2,4,5-C₆H₈(Y)₄; 1,2,3,5-C₆H₉(Y)₄;
      (iv) 1,2,3,4,5-C₆H₇(Y)₅; and
      (v) C₆H₆(Y)₆; and
      (k) Y(CF₂)ᵥY
R_{f} has up to 18 carbon atoms and is selected from the group consisting of:
   (a) C₁ to C₁₈ perfluoroalkyl;
   (b) -[CF₂CF(CF₃)O]ᵣ-CF₂-CF₂-CF₃, wherein r is an integer of at least 1;
   (c) -CF₂-(CF₂-O)_{q}-CF₃, wherein q is a integer of at least 2; and
   (d) -CH₂-C(CF₃)₂-CF₂-CF₂-CF₃;
      wherein up to 50% of the fluorine of the R_{f} group is optionally substituted with hydrogen;
      a is an integer from 1 to 10;
      b is an integer from 1 to 10;
      c is 1, 2 or 3;
      m is 0, 1 or 2;
      n is an integer greater than or equal to 2;
      v is an even integer from 2 to 14;
      R¹ is C₁ to C₈ alkyl or aryl;
      Y is -(CR²R³)ₖCR⁴R⁵CR⁶R⁷(CR⁸R⁹)ₕ-
      R² to R⁹ are each independently hydrogen, C₁ to C₈ alkyl, or aryl, provided that at least one of R⁴ to R⁷ is hydrogen;
      k and h are each independently a integer from 0 to 10, provided that at least one of k or h is zero; and
      Z is C₁ to C₄ alkyl, 3,3,3-trifluoropropyl, aralkyl or aryl.

The present invention also provides a compound of formula IA

X(R¹⁰Si(OCₐH₂ₐR_{f})₂)ₙ IA

wherein:
X is at least one organic link selected from the group consisting of:
   (a) R¹ₘSiY₄₋ₘ;
   (b) ring structures 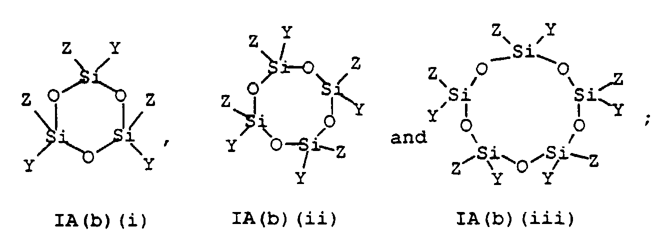
   (c) R¹ₘSi(OSi(CH₃)₂Y)₄₋ₘ;
   (d) CH₃SiY₂OSiY₂CH₃;
   (e) Y₃SiOSiY₃;
   (f) Y₂(CH₃)Si(CH₂)_{b}Si(CH₃)Y₂;
   (g) Y₃Si(CH₂)_{b}SiY₃;
   (h) Y₃SiC₆H₄SiY₃;
   (i) substituted benzene, including all isomers, selected from the group consisting of:
      (i) C₆H₃(SiZ₃-_{c}Y_{c})₃;
      (ii) C₆H₂(SiZ_{3-c}Y_{c})₄;
      (iii) C₆H(SiZ₃-_{c}Y_{c})₅; and
      (iv) C₆(SiZ₃-_{c}Y_{c})₆; and
   (j) substituted cyclohexane, including all stereoisomers, selected from the group consisting of:
      (i) 1,2-C₆H₁₀(Y)₂; 1,3-C₆H₁₀(Y)₂;1,4-C₆H₁₀(Y)₂;
      (ii) 1,2,4-C₆H₉(Y)₃;1,2,3-C₆H₉(Y)₃; 1,3,5-C₆H₉(Y)₃;
      (iii) 1,2,3,4-C₆H₈(Y)₄; 1,2,4,5-C₆H₈(Y)₄; 1,2,3,5-C₆H₉(Y)₄;
      (iv) 1,2,3,4,5-C₆H₇(Y)₅; and
      (v) C₆H₆(Y)₆;
   R_{f}has up to 18 carbon atoms and is selected from the group consisting of:
      (a) C₁ to C₁₈ perfluoroalkl;
      (b) -[CF₂CF(CF₃)O]ᵣ-CF₂-CF₂-CF₃, wherein r is an integer of at least 1;
      (c) -CF₂-(CF₂-O)_{q}-CF₃,wherein q is an integer of at least 2;and
      (d) -CH₂-C(CF₃)₂-CF₂-CF₂-CF₃;
         wherein up to 50% of the fluorine of the R_{f} group is optionally substituted with hydrogen;
         Z is C₁ to C₄ alkyl, 3,3,3-trifluoropropyl, aralkyl or aryl;
         Y is -(CR²R³)ₖCR⁴R⁵CR⁶R⁷(CR⁸R⁹)ₕ-;
         R¹ is C₁ to C₈ alkyl or aryl;
         R² to R⁹ are each independently hydrogen, C₁ to C₈ alkyl or aryl, provided that at least one of R⁴ to R⁷ is hydrogen;
         R¹⁰ is C₁ to C₈ alkyl or CₐH₂ₐR_{f};
         m is 0, 1 or 2;
         k and h are each independently an integer from 0 to 10, provided that at least one of k or h is zero;
         a is an integer from 1 to 10;
         b is an integer from 1 to 10;
         c is 1,2 or 3; and
         n is a integer greater than or equal to 2.

The present invention also provides a compound of formula II

Si[(CH₂)_{f}Si(CH₃)_{3-d}((CH₂)ₑSi(OR¹⁰)_{d}]₄ II

wherein:
d is 1,2 or 3;
e is a integer from 2 to 10;
f is an integer from 2 to 10;
R¹⁰is C₁ to about C₈ alkyl or CₐH₂ₐR_{f};
a is an integer from 1 to 10;
R_{f} has up to 18 carbon atoms and is selected from the group consisting of:
   (a) C₁ to C₁₈ perfluoroalkyl;
   (b) -[CF₂CF(CF₃)O]ᵣ-CF₂-CF₂-CF₃, wherein r is a integer of at least 1;
   (c) -CF₂-(CF₂-O)_{q}-CF₃, wherein q is a integer of at least 2; and
   (d) -CH₂-C(CF₃)₂-CF₂-CF₂-CF₃;
      wherein up to 50% of the fluorine of the R_{f} group is optionally substituted with hydrogen.

The present invention further provides a oligomeric compound of formula III

Si(OCₐH₂ₐR_{f})_{4-z}O_{z/2} III

wherein:
z is a number from 0.5 to 3.0;
a is an integer from 1 to 10; and
R_{f} has up to 18 carbon atoms and is selected from the group consisting of:
   (a) C₁ to C₁₈ perfluoroalkyl;
   (b) -[CF₂CF(CF₃)O]ᵣ-CF₂-CF₂-CF₃, wherein r is a integer of at least 1;
   (c) -CF₂-(CF₂-O)_{q}-CF₃, wherein q is a integer of at least 2; and
   (d) -CH₂-C(CF₃)₂-CF₂-CF₂-CF₃;
      wherein up to 50% of the fluorine of the R_{f} group is optionally substituted with hydrogen.

The present invention also provides a oligomeric compound of formula IV

R_{f}-(CH₂)_{y}-Si(OR¹⁴)_{3-z}O_{z/2} IV

wherein:
z is a number from 0.5 to 2.5;
y is an integer from 2 to 10;
each R¹⁴ is independently C₁ to C₈ alkyl, C₁ to C₁₀ carboxy, C₁ to C₁₀ fluorocarboxy or CₐH₂ₐR_{f};
a is an integer from 1 to 10; and
R_{f} has up to 18 carbon atoms and is selected from the group consisting of:
   (a) C₁ to C₁₈ perfluoroalkyl;
   (b) -[CF₂CF(CF₃)O]ᵣ-CF₂-CF₂-CF₃, wherein r is a integer of at least 1;
   (c) -CF₂-(CF₂-O)_{q}-CF₃, wherein q is an integer of at least 2; and
   (d) -CH₂-C(CF₃)₂-CF₂-CF₂-CF₃;
      wherein up to 50% of the fluorine of the R_{f} group is optionally substituted with hydrogen.

### DETAILED DESCRIPTION

For the compounds of formula I, IA, II, III and IV as defined above, the R_{f} group can be a fluoroalkyl or perfluoroaklkyl group, which can be either normal or branched, and has up to about 18 carbon atoms: preferably one to eight carbon atoms, especially preferred one to three carbon atoms. Normal perfluoroalkyl groups include, for example, trifluoromethyl, perfluoroethyl, perfluoropropyl, perfluorobutyl, perfluoropentyl, perfluorohexyl, perfluorooctyl, perfluorodecyl, perfluorododecyl, and perfluorooctadecyl. R_{f} is preferably CF₃, C₂F₅ or C₃F₇. Fluorine-bearing compounds of formulas I, IA, II, III and IV where R_{f} has more than eighteen carbon atoms are considered less practical to synthesize, although such fluorosilanes would be perfectly suitable in all applications contemplated for this class of compounds. A typical suitable branched fluoroalkyl group is -CH₂-C(CF₃)₂-CF₂-CF₂-CF₃.

The R_{f} groups also can be certain perfluoro(alkyleneoxy)alkyl)radicals. These include perfluoro(methylene(polymethyleneoxy)methyl) radicals (c) and perfluoro((polyisopropyleneoxy)propyl) radicals (b).

For the compounds of formula I and IA, X is preferably (a) R¹ₘSiY₄₋ₘ; the ring structures of formula Ib(i)-(iii) and IA(b)(i)-(iii); (c) R¹ₘSi(OSi(CH₃)₂Y)₄₋ₘ or(k)Y(CF₂)ᵥY. The most preferred organic link X, is where m is 0, k is 0 or 1, h is 0 or 1, and all of R² to R⁹ are hydrogen. R_{f} is preferably CF₃, C₂F₅ or n-C₃F₇. Z is preferably CH₃; the preferred aralkyl being benzyl and the preferred aryl being phenyl. n is preferably 2-6, most preferably 2,3 or 4; a is preferably 1; and v is preferably 4,6,8 or 10, most preferably 6.

Representative examples of compounds of formula I are:
Si(CH₂CH₂Si(OCH₂CF₃)₃)₄;
Si(CH₂CH₂Si(OCH₂CF₂CF₃)₃)₄;
Si(CH₂CH₂Si(OCH₂(CF₂)₂CF₃)₃)₄;
Si(OSi(CH₃)₂CH₂CH₂Si(OCH₂CF₃)₃)₄;
Si(OSi(CH₃)₂CH₂CH₂Si(OCH₂(CF₂)₂CF₃)₃)₄;
Si(OSi(CH₃)₂CH₂CH₂CH₂Si(OCH₂CF₃)₃)₄;
cyclo-((CH₃)(CF₃CH₂O)₃SiCH₂CH₂)SiO)₄;
cyclo-((CH₃)(CF₃CH₂O)₃SiCH₂CH₂CH₂)SiO)₄;
cyclo-((CH₃)(CF₃CH₂O)₃SiCH₂CH₂CH₂)SiO)₅;
cyclo-(CH₃(CF₃(CF₂)₂CH₂O)₃SiCH₂CH₂)SiO)₄;
(CF₃CH₂O)₃SiCH₂CH₂(CF₂)₆CH₂CH₂Si(OCH₂CF₃)₃;
(CF₃(CF₂)₂CH₂O)₃SiCH₂CH₂(CF₂)₆CH₂CH₂Si(OCH₂(CF₂)₂CF₃)₃;
   and
(CF₃CH₂O)₃Si(CH₂)₆(CF₂)₆(CH₂)₆Si(OCH₂CF₃)₃.

Representative examples of formula IA are:
Si(CH₂CH₂SiCH₃(OCH₂CF₃)₂)₄;
Si(CH₂CH₂SiCH₃(OCH₂(CF₂)₂CF₃)₂)₄;
Si(OSi(CH₃)₂CH₂CH₂SiCH₃(OCH₂CF₃)₂)₄;
Si(OSi(CH₃)₂CH₂CH₂SiCH₃(OCH₂(CF₂)₂CF₃)₂)₄;
Si(OSi(CH₃)₂CH₂CH₂CH₂SiCH₃(OCH₂CF₃)₂)₄;
(CF₃CH₂O)₂CH₃SiCH₂CH₂(CF₂)₆CH₂CH₂SiCH₃(OCH₂CF₃)₂;
(CF₃(CF₂)₂CH₂O)₂CH₃SiCH₂CH₂(CF₂)₆CH₂CH₂SiCH₃(OCH₂-(CF₂)₂CF₃)₂;
(CF₃CH₂O)₂CH₃Si(CH₂)₆(CF₂)₆(CH₂)₆SiCH₃(OCH₂CF₃)₂;
Si(CH₂CH₂Si(CH₂CH₂CF₂CF₃)(OCH₂CF₃)₂)₄;
Si(CH₂CH₂Si(CH₂CH₂CF₂CF₃)(OCH₂(CF₂)₂CF₃)₂)₄;
Si(OSi(CH₃)₂CH₂CH₂Si(CH₂CH₂CF₂CF₃)(OCH₂CF₃)₂)₄;
Si(OSi(CH₃)₂CH₂CH₂Si(CH₂CH₂CF₂CF₃)(OCH₂(CF₂)₂CF₃)₂)₄;
Si(OSi(CH₃)₂CH₂CH₂CH₂Si(CH₂CH₂CF₂CF₃)(OCH₂CF₃)₂)₄;
(CF₃CH₂O)₂(CF₃CF₂CH₂CH₂)SiCH₂CH₂(CF₂)₆CH₂CH₂Si(CH₂-CH₂CF₂CF₃)(OCH₂CF₃)₂;
(CF₃(CF₂)₂CH₂O)₂(CF₃CF₂CH₂CH₂)SiCH₂CH₂(CF₂)₆CH₂CH₂-Si(CH₂CH₂CF₂CF₃)(OCH₂(CF₂)₂CF₃)₃;
(CF₃CH₂O)₂(CF₃CF₂CH₂CH₂)Si(CH₂)₆(CF₂)₆(CH₂)₆Si(CH₂CH₂-CF₂CF₃)(OCH₂CF₃)₂;
cyclo-((CH₃)(CF₃CH₂O)₂CH₃SiCH₂CH₂)SiO)₄;
cyclo-((CH₃)(CF₃CH₂O)₂CH₃SiCH₂CH₂CH₂)SiO)₄;
cyclo-((CH₃)(CF₃CH₂O)₂CH₃SiCH₂CH₂CH₂)SiO)₅; and
cyclo-((CH₃)(CF₃(CF₂)₂CH₂O)₂SiCH₂CH₂)SiO)₄.

For the compounds of formula II as defined above, preferably f is 2 or 3; e is preferably 2 or 3; and R¹⁰ is preferably CH₂CF₃, CH₂C₂F₅, or CH₂C₃F₇.

Representative examples of formula II are
Si(CH₂CH₂CH₂Si(CH₃)₂CH₂CH₂CH₂Si(OCH₂CH₃)₃)₄;
Si(CH₂CH₂CH₂Si(CH₃)₂CH₂CH₂CH₂Si(OCH₂CF₃)₃)₄;
Si(CH₂CH₂CH₂SiCH₃(CH₂CH₂CH₂Si(OCH₂CH₃)₃)₂)₄;
Si(CH₂CH₂CH₂SiCH₃(CH₂CH₂CH₂Si(OCH₂CF₃)₃)₂)₄; and
Si(CH₂CH₂CH₂Si(CH₂CH₂CH₂Si(OCH₂CF₃)₃)₃)₄.

Preferably the fluoroalkoxysilanes of formula I, formula IA and formula II are soluble in one or more fluorinated solvents. Perfluoro aliphatic (e.g., perfluoro(butyl THF)), polyfluoro aliphatic (e.g., C₃F₇OCHFCF₃) and perfluoroaromatic (e.g., hexafluorobenzene) solvent systems can be utilized. Preferred solvents comprise perfluoro(butyl THF), e.g., "FLUORINERT" FC-75™; "FLUORINERT" FC-40™, a mixture of perfluoroalkylamines; perfluoro phenathrene, e.g. "FLUTEC" PP-11™; C₃F₇OCHFCF₃, e.g., "FREON" E1™; hexafluorobenzene (C₆F₆); perfluoromethylcyclohexane, C₆F₁₁(CF₃); and perfluoro(n-ethylmorpholine). The solubility of compounds of formula I were determined in hexafluorobenzene (C₆F₆), perfluoro(butyl THF) (FC-75), hexane, and tetrahydrofuran (THF) and are shown below in Table I.

**Table I**

| Solubility of Fluoroalkoxy Silanes | | | | |
|---|---|---|---|---|
| Compound | C₆F₆ | FC-75 | Hexane | THF |
| Si(CH₂CH₂Si(OCH₂CF₃)₃)₄ | Y | N | N | Y |
| Si(CH₂CH₂Si(OCH₂C₃F₇)₃)₄ | Y | Y | N | N |
| (CH₃(CH₂CH₂Si(OCH₂CF₃)₃)SiO)₄ | Y | N | N | Y |
| (CH₃(CH₂CH₂Si(OCH₂C₃F₇)₃)SiO)₄ | Y | Y | N | Y |
| Si(OSi(CH₃)₂CH₂CH₂Si(OCH₂CF₃)₃)₄ | Y | N | N | Y |
| Si(OSi(CH₃)₂CH₂CH₂Si(OCH₂C₃F₇)₃)₄ | Y | Y | N | Y |
| [(CF₂)₃CH₂CH₂Si(OCH₂CF₃)₃]₂ | Y | N | N | Y |
| [(CF₂)₃CH₂CH₂Si(OCH₂C₃F₇)₃]₂ | Y | Y | N | Y |

Synthesis of the compounds of formula I and IA are afforded from hydrosilylation reactions, i.e., an addition reaction between a compound containing a Si-H group with a compound containing aliphatic unsaturation, such as an alkene, in the presence of a catalyst or free radical initiator. Precursor segments containing -CH=CH₂ groups react with other precursor segments which contain terminal Si-H bonds.

Either precursor segment can contain the vinyl or other unsaturated group capable of Si-H addition. For example, Si(CH=CH₂)₄ reacts with HSi(OCH₂CF₃)₃ to form the precursor Si[CH₂CH₂Si(OCH₂CF₃)₃]₄; Si(CH=CH₂)₄ reacts with HSiCH₃(OCH₂CF₃)₂ to form the precursor Si(CH₂CH₂SiCH₃(OCH₂CF₃)₂)₄; and cyclo-[(CH₃)HSiO]₄ reacts with CH₂=CH-Si(OCH₂C₃F₇)₃ to form the precursor cyclo-((CH₃)(CF₃(CF₂)₂CH₂O)₃SiCH₂CH₂)SiO)₄.

All of the following equations provide for preparation of compounds of formula I by addition of a silane across a carbon-carbon double bond for various definitions of X: (Note that preparation of compounds of formula IA proceed in like fashion except that the group Si(R¹⁰)(OCₐH₂ₐR_{f})₂ replaces all instances of Si(OCₐH₂ₐR_{f})₃.)
(a) when X is R¹ₘSiY₄₋ₘ:

### Eqn. 1A:

${\text{R}}^{\text{1}} {\text{mSi[(CR}}^{\text{2}} {\text{R}}^{\text{3}} {\text{)}}_{\text{k}} {\text{CR}}^{\text{4}} {\text{=CR}}^{\text{6}} {\text{R}}^{\text{7}} {\text{]}}_{\text{4-m}} {\text{+ 4-m H(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{→ R}}_{\text{m}}^{\text{1}} {\text{Si[(CR}}^{\text{2}} {\text{R}}^{\text{3}} {\text{)}}_{\text{k}} {\text{CR}}^{\text{4}} {\text{HCR}}^{\text{6}} {\text{R}}^{\text{7}} {\text{(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{]}}_{\text{4-m}}$

### Eqn.1B:

${\text{R}}^{\text{1}} {\text{mSi[(CR}}^{\text{2}} {\text{R}}^{\text{3}} {\text{)}}_{\text{k}} {\text{H]4-m + 4-m CR}}^{\text{4}} {\text{R}}^{\text{5}} {\text{=CR}}^{\text{6}} {\text{(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{→ R}}_{\text{m}}^{\text{1}} {\text{Si[(CR}}^{\text{2}} {\text{R}}^{\text{3}} {\text{)}}_{\text{k}} {\text{CR}}^{\text{4}} {\text{R}}^{\text{5}} {\text{CR}}^{\text{6}} {\text{H(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{]}}_{\text{4-m}}$
(b) when X is a ring structure of the type Ib(i), Ib(ii) or Ib(iii), as previously defined, which can be abbreviated (SiO)ᵤZᵤ(YSi(OCₐH₂ₐR_{f})₃)ᵤ, wherein u=3 for Ib(i), u=4 for Ib(ii), and u= 5 for Ib(iii); then

### Eqn.2A:

${\text{(SiO)}}_{\text{u}} {\text{Z}}_{\text{u}} {\text{[(CR}}^{\text{2}} {\text{R}}_{\text{k}}^{\text{3)}} {\text{CR}}^{\text{4=}} {\text{CR}}^{\text{6}} {\text{R}}^{\text{7}} {\text{]}}_{\text{u}} {\text{+ u H(CR}}^{\text{9}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{→ (SiO)}}_{\text{u}} {\text{Z}}_{\text{u}} {\text{[(CR}}^{\text{2}} {\text{R}}^{\text{3}} {\text{)}}_{\text{k}} {\text{CR}}^{\text{4}} {\text{HCR}}^{\text{6}} {\text{R}}^{\text{7}} {\text{(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{]}}_{\text{u}}$

### Eqn.2B:

${\text{(SiO)}}_{\text{u}} {\text{Z}}_{\text{u}} {\text{[(CR}}^{\text{2}} {\text{R}}^{\text{3}} {\text{)}}_{\text{k}} {\text{H]}}_{\text{u}} {\text{+ u CR}}^{\text{4}} {\text{R}}^{\text{5}} {\text{=CR}}^{\text{6}} {\text{(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)3 → (SiO)}}_{\text{u}} {\text{Z}}_{\text{u}} {\text{[(CR}}^{\text{2}} {\text{R}}^{\text{3}} {\text{)}}_{\text{k}} {\text{CR}}^{\text{4}} {\text{R}}^{\text{5}} {\text{CR}}^{\text{6}} {\text{H(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{]}}_{\text{u}}$
(c) when X is R¹ₘSi(OSi(CH₃)₂Y)₄₋ₘ

### Eqn.3A:

${\text{R}}^{\text{1}} {\text{mSi[OSi(CH}}_{\text{3}} {\text{)}}_{\text{2}} {\text{(CR}}^{\text{2}} {\text{R}}^{\text{3}} {\text{)}}_{\text{k}} {\text{CR}}^{\text{4}} {\text{=CR}}^{\text{6}} {\text{R}}^{\text{7}} {\text{]}}_{\text{4-m}} {\text{+ 4-m H(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{→ R}}_{\text{m}}^{\text{1}} {\text{Si[OSi(CH}}_{\text{3}} {\text{)}}_{\text{2}} {\text{(CR}}^{\text{2}} {\text{R}}^{\text{3}} {\text{)}}_{\text{k}} {\text{CR}}^{\text{4}} {\text{HCR}}^{\text{6}} {\text{R}}^{\text{7}} {\text{(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{]}}_{\text{4-m}}$

### Eqn.3B:

${\text{R}}^{\text{1}} {\text{mSi[OSi(CH}}_{\text{3}} {\text{)}}_{\text{2}} {\text{(CR}}^{\text{2}} {\text{R}}^{\text{3}} {\text{)}}_{\text{k}} {\text{H]}}_{\text{4-m}} {\text{+ 4-m CR}}^{\text{4}} {\text{R}}^{\text{5}} {\text{=CR}}^{\text{6}} {\text{(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{→ R}}_{\text{m}}^{\text{1}} {\text{Si[OSi(CH}}_{\text{3}} {\text{)}}_{\text{2}} {\text{(CR}}^{\text{2}} {\text{R}}^{\text{3}} {\text{)}}_{\text{k}} {\text{CR}}^{\text{4}} {\text{R}}^{\text{5}} {\text{CR}}^{\text{6}} {\text{H(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{]}}_{\text{4-m}}$
(d) when X is CH₃SiY₂OSiY₂CH₃:

### Eqn.4A:

${\text{CH}}_{\text{3}} {\text{Si((CR}}^{\text{2}} {\text{R}}^{\text{3}} {\text{)}}_{\text{k}} {\text{CR}}^{\text{4=}} {\text{CR}}^{\text{6}} {\text{R}}^{\text{7}} {\text{)}}_{\text{2}} {\text{OSi((CR}}^{\text{2}} {\text{R}}^{\text{3}} {\text{)}}_{\text{k}} {\text{CR}}^{\text{4}} {\text{=CR}}^{\text{6}} {\text{R}}^{\text{7}} {\text{)}}_{\text{2}} {\text{CH}}_{\text{3}} {\text{+ 4 H(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{→ CH}}_{\text{3}} {\text{Si((CR}}^{\text{2}} {\text{R}}^{\text{3}} {\text{)}}_{\text{k}} {\text{CR}}^{\text{4}} {\text{HCR}}^{\text{6}} {\text{R}}^{\text{7}} {\text{(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{)}}_{\text{2}} {\text{OSi((CR}}^{\text{2}} {\text{R}}^{\text{3}} {\text{)}}_{\text{k}} {\text{CR}}^{\text{4}} {\text{HCR}}^{\text{6}} {\text{R}}^{\text{7}} {\text{(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{)}}_{\text{2}} {\text{CH}}_{\text{3}}$

### Eqn.4B:

${\text{CH}}_{\text{3}} {\text{Si((CR}}^{\text{2}} {\text{R}}^{\text{3}} {\text{)}}_{\text{k}} {\text{H)}}_{\text{2}} {\text{OSi((CR}}^{\text{2}} {\text{R}}^{\text{3}} {\text{)}}_{\text{k}} {\text{H)}}_{\text{2}} {\text{CH}}_{\text{3}} {\text{+ 4 CR}}^{\text{4}} {\text{R}}^{\text{5}} {\text{=CR}}^{\text{6}} {\text{(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{→ CH}}_{\text{3}} {\text{Si((CR}}^{\text{2}} {\text{R}}^{\text{3}} {\text{)}}_{\text{k}} {\text{CR}}^{\text{4}} {\text{R}}^{\text{5}} {\text{CR}}^{\text{6}} {\text{H(CR}}^{\text{8}} {\text{R}}^{\text{9}} {\text{)}}_{\text{h}}$Si(OCₐH₂ₐR_{f})₃)₂OSi((CR²R³)ₖCR⁴R⁵CR⁶H(CR⁸R⁹)ₕSi(OCₐH₂ₐR_{f})₃)₂CH₃
(e) when X is Y₃SiOSiY₃

### Eqn 5A:

${\text{Si((CR}}^{\text{2}} {\text{R}}^{\text{3}} {\text{)}}_{\text{k}} {\text{CR}}^{\text{4}} {\text{=CR}}^{\text{6}} {\text{R}}^{\text{7}} {\text{)}}_{\text{3}} {\text{OSi((CR}}^{\text{2}} {\text{R}}^{\text{3}} {\text{)}}_{\text{k}} {\text{CR}}^{\text{4}} {\text{=CR}}^{\text{6}} {\text{R}}^{\text{7}} {\text{)}}_{\text{3}} {\text{+ 6 H(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{→ Si((CR}}^{\text{2}} {\text{R}}^{\text{3}} {\text{)}}_{\text{k}} {\text{CR}}^{\text{4}} {\text{HCR}}^{\text{6}} {\text{R}}^{\text{7}} {\text{(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{)}}_{\text{3}} {\text{OSi((CR}}^{\text{2}} {\text{R}}^{\text{3}} {\text{)}}_{\text{k}} {\text{CR}}^{\text{4}} {\text{HCR}}^{\text{6}} {\text{R}}^{\text{7}} {\text{(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{)}}_{\text{3}}$

### Eqn.5B:

${\text{Si((CR}}^{\text{2}} {\text{R}}^{\text{3}} {\text{)}}_{\text{k}} {\text{H)}}_{\text{3}} {\text{OSi((CR}}^{\text{2}} {\text{R}}^{\text{3}} {\text{)}}_{\text{k}} {\text{H)}}_{\text{3}} {\text{+ 6 CR}}^{\text{4}} {\text{R}}^{\text{5}} {\text{=CR}}^{\text{6}} {\text{(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{→ Si((CR}}^{\text{2}} {\text{R}}^{\text{3}} {\text{)}}_{\text{k}} {\text{CR}}^{\text{4}} {\text{R}}^{\text{5}} {\text{CR}}^{\text{6}} {\text{H(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{)}}_{\text{3}} {\text{OSi((CR}}^{\text{2}} {\text{R}}^{\text{3}} {\text{)}}_{\text{k}} {\text{CR}}^{\text{4}} {\text{R}}^{\text{5}} {\text{CR}}^{\text{6}} {\text{H (CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{)}}_{\text{3}}$
(f) when X is Y₂(CH₃)Si(CH₂)_{b}Si(CH₃)Y₂

### Eqn.6A:

${\text{Si((CR}}^{\text{2}} {\text{R}}^{\text{3}} {\text{)}}_{\text{k}} {\text{CR}}^{\text{4=}} {\text{CR}}^{\text{6}} {\text{R}}^{\text{7}} {\text{)}}_{\text{2}} {\text{(CH}}_{\text{3}} {\text{)(CH}}_{\text{2}} {\text{)}}_{\text{b}} {\text{Si((CR}}^{\text{2}} {\text{R}}^{\text{3}} {\text{)}}_{\text{k}} {\text{CR}}^{\text{4}} {\text{=CR}}^{\text{6}} {\text{R}}^{\text{7}} {\text{)}}_{\text{2}} {\text{(CH}}_{\text{3}} {\text{) + 4 H(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{→ Si((CR}}^{\text{2}} {\text{R}}^{\text{3}} {\text{)}}_{\text{k}} {\text{CR}}^{\text{4}} {\text{HCR}}^{\text{6}} {\text{R}}^{\text{7}} {\text{(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{)}}_{\text{2}} {\text{(CH}}_{\text{3}} {\text{)(CH}}_{\text{2}} {\text{)}}_{\text{b}} {\text{Si((CR}}^{\text{2}} {\text{R}}^{\text{3}} {\text{)}}_{\text{k}} {\text{CR}}^{\text{4}} {\text{HCR}}^{\text{6}} {\text{R}}^{\text{7}} {\text{(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{)}}_{\text{2}} {\text{(CH}}_{\text{3}} \text{)}$

### Eqn.6B:

${\text{Si((CR}}^{\text{2}} {\text{R}}_{\text{k}}^{\text{3)}} {\text{H)}}_{\text{2}} {\text{(CH}}_{\text{3}} {\text{)(CH}}_{\text{2}} {\text{)}}_{\text{b}} {\text{Si((CR}}^{\text{2}} {\text{R}}^{\text{3}} {\text{)}}_{\text{k}} {\text{H)}}_{\text{2}} {\text{(CH}}_{\text{3}} {\text{) + 4 CR}}^{\text{4}} {\text{R}}^{\text{5}} {\text{=CR}}^{\text{6}} {\text{(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{→ Si((CR}}^{\text{2}} {\text{R}}^{\text{3}} {\text{)}}_{\text{k}} {\text{CR}}^{\text{4}} {\text{R}}^{\text{5}} {\text{CR}}^{\text{6}} {\text{H(CR}}^{\text{8}} {\text{R}}^{\text{9}} {\text{)}}_{\text{h}} {\text{Si (OC}}_{\text{a}} {\text{H}}_{\text{2a}} {\text{R}}_{\text{f}} {\text{)}}_{\text{3}} {\text{)}}_{\text{2}} {\text{(CH}}_{\text{3}} {\text{)(CH}}_{\text{2}} {\text{)}}_{\text{b}} {\text{Si((CR}}^{\text{2}} {\text{R}}^{\text{3}} {\text{)}}_{\text{k}} {\text{CR}}^{\text{4}} {\text{R}}^{\text{5}} {\text{CR}}^{\text{6}} {\text{H(CR}}^{\text{8}} {\text{R}}^{\text{9}} {\text{)}}_{\text{b}} {\text{Si(OC}}_{\text{a}} {\text{H}}_{\text{2a}} {\text{R}}_{\text{f}} {\text{)}}_{\text{3}} {\text{)}}_{\text{3}} {\text{(CH}}_{\text{3}} \text{)}$
(g) when X is Y₃Si(CH₂)_{b}SiY₃:

### Eqn. 7A:

${\text{Si((CR}}^{\text{2}} {\text{R}}^{\text{3}} {\text{)}}_{\text{k}} {\text{CR}}^{\text{4}} {\text{=CR}}^{\text{6}} {\text{R}}^{\text{7}} {\text{)}}_{\text{3}} {\text{(CH}}_{\text{2}} {\text{)}}_{\text{b}} {\text{Si((CR}}^{\text{2}} {\text{R}}^{\text{3}} {\text{)}}_{\text{k}} {\text{CR}}^{\text{4}} {\text{=CR}}^{\text{6}} {\text{R}}^{\text{7}} {\text{)}}_{\text{3}} {\text{+ 6 H(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{→ Si((CR}}^{\text{2}} {\text{R}}^{\text{3}} {\text{)}}_{\text{k}} {\text{CR}}^{\text{4}} {\text{HCR}}^{\text{6}} {\text{R}}^{\text{7}} {\text{(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{)}}_{\text{3}} {\text{(CH}}_{\text{2}} {\text{)}}_{\text{b}} {\text{Si((CR}}^{\text{2}} {\text{R}}^{\text{3}} {\text{)}}_{\text{k}} {\text{CR}}^{\text{4}} {\text{HCR}}^{\text{6}} {\text{R}}^{\text{7}} {\text{(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{)}}_{\text{3}}$

### Eqn. 7B:

${\text{Si((CR}}^{\text{2}} {\text{R}}^{\text{3}} {\text{)}}_{\text{k}} {\text{H)}}_{\text{3}} {\text{(CH}}_{\text{2}} {\text{)}}_{\text{b}} {\text{Si((CR}}^{\text{2}} {\text{R}}^{\text{3}} {\text{)}}_{\text{k}} {\text{H)}}_{\text{3}} {\text{+ 6 CR}}^{\text{4}} {\text{R}}^{\text{5}} {\text{=CR}}^{\text{6}} {\text{(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{→ Si((CR}}^{\text{2}} {\text{R}}^{\text{3}} {\text{)}}_{\text{k}} {\text{CR}}^{\text{4}} {\text{R}}^{\text{5}} {\text{CR}}^{\text{6}} {\text{H(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{)}}_{\text{3}} {\text{(CH}}_{\text{2}} {\text{)}}_{\text{b}} {\text{Si((CR}}^{\text{2}} {\text{R}}^{\text{3}} {\text{)}}_{\text{k}} {\text{CR}}^{\text{4}} {\text{R}}^{\text{5}} {\text{CR}}^{\text{6}} {\text{H(CR}}^{\text{8}} {\text{R}}^{\text{9}} {\text{)}}_{\text{b}} {\text{Si(OC}}_{\text{a}} {\text{H}}_{\text{2a}} {\text{R}}_{\text{f}} {\text{)}}_{\text{3}} {\text{)}}_{\text{3}}$
(h) when X is Y₃SiC₆H₄SiY₃:

### Eqn. 8A:

${\text{Si((CR}}^{\text{2}} {\text{R}}^{\text{3}} {\text{)}}_{\text{k}} {\text{CR}}^{\text{4}} {\text{=CR}}^{\text{6}} {\text{R}}^{\text{7}} {\text{)}}_{\text{3}} {\text{C}}_{\text{6}} {\text{H}}_{\text{4}} {\text{Si((CR}}^{\text{2}} {\text{R}}^{\text{3}} {\text{)}}_{\text{k}} {\text{CR}}^{\text{4}} {\text{=CR}}^{\text{6}} {\text{R}}^{\text{7}} {\text{)}}_{\text{3}} {\text{+ 6 H(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{→ Si((CR}}^{\text{2}} {\text{R}}^{\text{3}} {\text{)}}_{\text{k}} {\text{CR}}^{\text{4}} {\text{HCR}}^{\text{6}} {\text{R}}^{\text{7}} {\text{(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{)}}_{\text{3}} {\text{C}}_{\text{6}} {\text{H}}_{\text{4}} {\text{Si((CR}}^{\text{2}} {\text{R}}^{\text{3}} {\text{)}}_{\text{k}} {\text{CR}}^{\text{4}} {\text{HCR}}^{\text{6}} {\text{R}}^{\text{7}} {\text{(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{)}}_{\text{3}}$

### Eqn. 8B:

${\text{Si((CR}}^{\text{2}} {\text{R}}^{\text{3}} {\text{)}}_{\text{k}} {\text{H)}}_{\text{3}} {\text{C}}_{\text{6}} {\text{H}}_{\text{4}} {\text{Si((CR}}^{\text{2}} {\text{R}}^{\text{3}} {\text{)}}_{\text{k}} {\text{H)}}_{\text{3}} {\text{+ 6 CR}}^{\text{4}} {\text{R}}^{\text{5}} {\text{=CR}}^{\text{6}} {\text{(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{→ Si((CR}}^{\text{2}} {\text{R}}^{\text{3}} {\text{)}}_{\text{k}} {\text{CR}}^{\text{4}} {\text{R}}^{\text{5}} {\text{CR}}^{\text{6}} {\text{H(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{)}}_{\text{3}} {\text{C}}_{\text{6}} {\text{H}}_{\text{4}} {\text{Si((CR}}^{\text{2}} {\text{R}}^{\text{3}} {\text{)}}_{\text{k}} {\text{CR}}^{\text{4}} {\text{R}}^{\text{5}} {\text{CR}}^{\text{6}} {\text{H(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{)}}_{\text{3}}$
(i) when X is a substituted benzene structure of the type, as previously defined, which can be abbreviated C₆H_{6-w}(SiZ_{3-c}Y_{c})_{w}, wherein w represents the number of substitutions on the benzene ring:

### Eqn. 9A:

${\text{w x (OC}}_{\text{a}} {\text{H}}_{\text{2a}} {\text{R}}_{\text{f}} {\text{)}}_{\text{3}} {\text{Si(CR}}^{\text{8}} {\text{R}}^{\text{9}} {\text{)}}_{\text{h}} {\text{H + C}}_{\text{6}} {\text{H}}_{\text{6-w}} {\text{[SiZ}}_{\text{3-c}} {\text{((CR}}^{\text{2}} {\text{R}}^{\text{3}} {\text{)}}_{\text{k}} {\text{CR}}^{\text{4}} {\text{=CR}}^{\text{6}} {\text{R}}^{\text{7}} {\text{)}}_{\text{c}} {\text{]}}_{\text{w}} {\text{→ C}}_{\text{6}} {\text{H}}_{\text{6-w}} {\text{[SiZ}}_{\text{3-c}} {\text{((CR}}^{\text{2}} {\text{R}}^{\text{3}} {\text{)}}_{\text{k}} {\text{CR}}^{\text{4}} {\text{HCR}}^{\text{6}} {\text{R}}^{\text{7}} {\text{(CR}}^{\text{8}} {\text{R}}^{\text{9}} {\text{)}}_{\text{b}} {\text{Si(OC}}_{\text{a}} {\text{H}}_{\text{2a}} {\text{R}}_{\text{f}} {\text{)}}_{\text{3}} {\text{)}}_{\text{c}} {\text{]}}_{\text{w}}$

### Eqn. 9B:

${\text{w x CR}}^{\text{4}} {\text{R}}^{\text{5=}} {\text{CR}}^{\text{6}} {\text{(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{+ C}}_{\text{6}} {\text{H}}_{\text{6-w}} {\text{[SiZ}}_{\text{3-c}} {\text{((CR}}^{\text{2}} {\text{R}}^{\text{3}} {\text{)}}_{\text{k}} {\text{H)}}_{\text{c}} {\text{]}}_{\text{w}} {\text{→ C}}_{\text{6}} {\text{H}}_{\text{6-w}} {\text{[SiZ}}_{\text{3-c}} {\text{((CR}}^{\text{2}} {\text{R}}^{\text{3}} {\text{)}}_{\text{k}} {\text{CR}}^{\text{4}} {\text{R}}^{\text{5}} {\text{CR}}^{\text{6}} {\text{H(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{)}}_{\text{c}} {\text{]}}_{\text{w}}$
(j) when X is a substituted cyclohexane of the type, as previously defined, which can be abbreviated C₆H_{12-w}Y_{w}, wherein w is the number of substituents; then:

### Eqn. 10A:

${\text{C}}_{\text{6}} {\text{H}}_{\text{12-w}} {\text{((CR}}^{\text{2}} {\text{R}}^{\text{3}} {\text{)}}_{\text{k}} {\text{CR}}^{\text{4}} {\text{=CR}}^{\text{6}} {\text{R}}^{\text{7}} {\text{)}}_{\text{w}} {\text{+ w [(OC}}_{\text{a}} {\text{H}}_{\text{2a}} {\text{R}}_{\text{f}} {\text{)}}_{\text{3}} {\text{Si(CR}}^{\text{8}} {\text{R}}^{\text{9}} {\text{)}}_{\text{h}} {\text{H] → C}}_{\text{6}} {\text{H}}_{\text{12-w}} {\text{((CR}}^{\text{2}} {\text{R}}^{\text{3}} {\text{)}}_{\text{k}} {\text{CR}}^{\text{4}} {\text{HCR}}^{\text{6}} {\text{R}}^{\text{7}} {\text{(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{)}}_{\text{w}}$

For convenience the reaction of Equations denoted A or B above is chosen depending upon the commercial availability of the starting reagents. In each set of equations where an A and B are presented, h=0 in Eqn. A and k=0 in Eqn.B. Specific sources of reactants are listed hereinafter just prior to the Examples. A transition metal catalyst such as platinum, or a free radical initiatior is employed in an effective amount. Examples of suitable free radical initators include "VAZO"™ azo compounds available from E. I. du Pont de Nemours and Company, Wilmington, DE.

These reactions can be conducted at a temperature of from about 25°C to about 100°C. Preferably the process is conducted at about 80°C to about 100°C. The pressure employed is typically ambient, about 1 atm (1.01 x 10⁵ Pa). The reactions are carried out under an inert gas atmosphere, although use of an air atmosphere is not precluded. Reaction time is typically from about 4 hours to about 24 hours.

Use of solvent is not required in these reactions. Suitable solvents which may be employed are those capable of dissolving the reactants, such as toluene or THF, and which do not interfere with the reaction or generate undesirable by-products. The desired product can be isolated by any means known to those skilled in the art. Preferably the desired product is isolated by removal of volatiles under reduced pressure.

NMR and mass spectrometry have been used to characterize product purities. Typically, yields of completed reacted material exceed 95%, with the prinicpal impurities being either reverse (Markovnikov) hydrosilyation or incompletely substituted material containing unreacted -CH=CH₂ groups.

The following show the preparation of compounds of formula I (k) (and IA(k) when replacing the group Si(OCₐH₂ₐR_{f})₃ with Si(R¹⁰)(OCₐH₂ₐR_{f})₂):

### Eqn. 11A:

${\text{CR}}^{\text{7}} {\text{R}}^{\text{6}} {\text{=CR}}^{\text{4}} {\text{(CR}}^{\text{3}} {\text{R}}^{\text{2}} {\text{)}}_{\text{k}} {\text{(CF}}_{\text{2}} {\text{)}}_{\text{v}} {\text{(CR}}^{\text{2}} {\text{R}}^{\text{3}} {\text{)}}_{\text{k}} {\text{CR}}^{\text{4}} {\text{=CR}}^{\text{6}} {\text{R}}^{\text{7}} {\text{+ HSi(OC}}_{\text{a}} {\text{H}}_{\text{2a}} {\text{R}}_{\text{f}} {\text{)}}_{\text{3}} {\text{→ (OC}}_{\text{a}} {\text{H}}_{\text{2a}} {\text{R}}_{\text{f}} {\text{)}}_{\text{3}} {\text{SiCR}}^{\text{7}} {\text{R}}^{\text{6}} {\text{CR}}^{\text{4}} {\text{H(CR}}^{\text{3}} {\text{R}}^{\text{2}} {\text{)}}_{\text{k}} {\text{(CF}}_{\text{2}} {\text{)}}_{\text{v}} {\text{(CR}}^{\text{2}} {\text{R}}^{\text{3}} {\text{)}}_{\text{k}} {\text{CR}}^{\text{4}} {\text{HCR}}^{\text{6}} {\text{R}}^{\text{7}} {\text{-Si(OC}}_{\text{a}} {\text{H}}_{\text{2a}} {\text{R}}_{\text{f}} {\text{)}}_{\text{3}}$

Synthesis of the compounds of formula I(k) (and IA(k) when replacing the group Si(OCₐH₂ₐR_{f})₃ with Si(R¹⁰)(OCₐH₂ₐR_{f})₂) can also be realized by insertion of unsaturated trifluoroalkoxysilanes or trihalosilanes into the C-I bond of I(CF₂)ᵥI, followed by reduction of the C-I to C-H using standard organic reduction reagents, as shown below in Equation 11B. (P. Girard et al. in J. Am. Chem. Soc. (1980), vol 102, pp 2693-2698 describe the use of SmI₂ in reduction reactions.) Examples of suitable reagents are zinc metal, tri-n-butyl tin hydride or samarium iodide.

### Eqn. 11B:

${\text{I(CF}}_{\text{2}} {\text{)}}_{\text{v}} {\text{I + 2 CR}}^{\text{4}} {\text{R}}^{\text{5}} {\text{=CR}}^{\text{6}} {\text{(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}} {\text{→ (OC}}_{\text{a}} {\text{H}}_{\text{2a}} {\text{R}}_{\text{f}} {\text{)}}_{\text{3}} {\text{Si(CR}}^{\text{9}} {\text{R}}^{\text{8}} {\text{)h CR}}^{\text{6}} {\text{ICR}}^{\text{5}} {\text{R}}^{\text{4}} {\text{(CF}}_{\text{2}} {\text{)}}_{\text{v}} {\text{CR}}^{\text{4}} {\text{R}}^{\text{5}} {\text{CR}}^{\text{6}} {\text{I(CR}}^{\text{8}} {\text{R}}^{\text{9}} {\text{)}}_{\text{h}} {\text{Si(OC}}_{\text{a}} {\text{H}}_{\text{2a}} {\text{R}}_{\text{f}} {\text{)}}_{\text{3}}$which can be converted to the following with, for example, samarium iodide (SmI₂),

(OCₐH₂ₐR_{f})₃Si(CR⁹R⁸)ₕCR⁶HCR⁵R⁴(CF₂)ᵥCR⁴R⁵CR⁶H(CR⁸R⁹)ₕ(OCₐH₂ₐR_{f})₃.

Yields of the fluoroalkoxysilanes of formula I can be >99% using HSi(OCH₂CF₃)₃ and CH₂=CHSi(OCH₂CF₃)₃; slightly lower yields are found using HSi(OCH₂C₃F₇)₃ and CH₂=CHSi(OCH₂F₇)₃. This is believed to be due to the steric demands of the large tris(heptafluorobutoxy)silanes. Some branching is observed due to Markovnikov (α) addition of the silyl hydride.

Hydrosilylation of HSi(OR¹⁰)₃ , wherein R¹⁰ is defined above, onto polycarbosilane precursors, for example (Si(CH₂CH₂CH₂Si(CH₂CH=CH₂)₃)₄, leads to the formation of the "dendrimer" compounds of formula II. The synthesis of the dendrimers of formula II can start with the exhaustive allylation of tetrachlorosilane with a 10% excess of allylmagnesium bromide in diethyl ether (reflux, 4 h) to produce tetrallylsilane. The allyl groups of tetraallylsilane are hydrosilylated at room temperature for about 1-2 days with either trichlorosilane, dichloromethylsilane or chlorodimethylsilane (25% excess in the presence of a platinum catalyst, 10⁻⁴ to 10⁻⁵ mol per double bond) and an optional solvent, such as toluene or THF, to give the first generation dendrimers of formula II containing Si-Cl functional groups. Next, all the Si-Cl groups are replaced by SiCH₂CH=CH₂ groups by reaction with an excess of allylmagesium bromide in diethyl ether to produce dendrimers with 4 to 12 allyl end-groups. Hydrosilylation of these dendrimers by HSi(OCH₂CF₃)₃, HSi(OCH₂(CF₂)₂CF₃)₃ or HSi(OCH₂CH₃)₃ yields the dendrimers of formula II.

This route offers a unique flexibility; not only can the degree of branching be adjusted by replacing HSiCl₃ with HSiCl₂CH₃ or HSiCl(CH₃)₂ in the initial hydrosilylation, but also the length of the branches can be varied. With similar high yields, for example, vinyl-based silane dendrimers can be prepared up to the fourth generation by using vinylmagesium chloride in tetrahydrofuran (THF) in the alkenylation step. (See U.S. Patent 5,276,110 incorporated by reference herein.) As a additional benefit the reactive Si-Cl end groups allow a easy functionalization of the dendrimer surface to produce formula II compounds by direct reaction with alcohols or fluoroalcohols.

The compounds of formula III are prepared by dissolving a fluorine-bearing silane, such as one having the formula Si(OCH₂R_{f})₄, wherein R_{f} is as defined in formula III, or mixed silanes, such as Si(OCH₂R_{f})ₓ(OR)₄₋ₓ, wherein R is C₁ to about C₈ alkyl, and x=1-3, in a solvent in which water is soluble, such as isopropyl alcohol (IPA). A soluble source of fluoride ion, such as CsF, is added to the solution along with less than a 1.5:1 molar excess of water. The solution is maintained, with optional heating, until the water has been substantially consumed. The byproduct alcohols and any unreacted water are then removed from the system by, for instance, distillation. The remaining material is an oligomeric silicate with sufficient residual fluorine-bearing groups to be soluble in fluorinated solvents.

Alternatively, polysilicates of formula III can be made by combining a fluorine-bearing silane such as Si(OCH₂C₃F₇)₄ (FBS) with a stoichiometric deficiency (i.e., < 2:1) of trifluoroacetic acid (TFA) or other strong fluorocarboxylic acid. The solution will generally be heated so as to promote extensive reaction between the silane and acid. Reaction byproducts (ester, alcohol and any unreacted acid) are then removed, for example, by distillation.

Preparation of the oligomeric compounds of formula IV can proceed in similar fashion. In the alternative process using a strong fluorocarboxylic acid, heating is optional.

Formula III and formula IV are an idealized formulas which correspond to 100% crosslinking of the SiOH group; however, there can be residual uncrosslinked SiOH groups during preparation. z is the molar ratio of water or other gelling agent to silane. R_{f} is preferably CF₃, C₂F₅ or C₃F₇ for formula III and C₆F₁₃, n-C₈F₁₇ and n-C₁₀F₂₁ for formula IV and a is preferably 1 or 2.

Using trifluoroacetic acid and fluorinated solvents, the fluorine-bearing compounds of formula I, IA, II, III and IV of the present invention can be condensed into silica networks using non-aqueous sol-gel techniques. For example, the condensation of Si(OSi(CH₃)₂CH₂CH₂Si(OCH₂C₃F₇)₃ by CF₃COOH in perfluoro(butyl THF) (FC-75™) produces a clear gel, demonstrating that inorganic hybrid networks can be easily formed in fluorinated solvents. The advantage of using these new fluoroalkoxysilanes is that they are soluble in fluorinated solvents, thus one can manage sol-gel condensation and form inorganic/organic network materials using dissolved fluoropolymers in perfluorinated solvents such as hexafluorbenzene and perfluoro(butyl-THF) using trifluoroacetic acid in lieu of more conventional gelling agents. These network materials can then be used to coat a substrate, such as glass, to form a film. The fluorine-bearing compounds of formula I, IA, III and IV (and those of formula II that are soluble in fluorinated solvents) of the present invention can be also used in conjunction with dissolved fluoropolymers to provide semi-interpenetrating networks useful for a variety of applications including as primers for adhesion.

The compounds of formula II are useful in abrasion resistant materials, impact resistant glasses, and can act as crosslinking agents for some functionalized organic polymers.

### EXAMPLES

All reactions were carried out in a Vacuum Atmospheres Co. dry box or under nitrogen. In the examples, all commercial reagents were distilled prior to use. Trichlorosilane, tetravinylsilane, tetrachlorosilane, vinyltrichlorosilane, allyltrichlorosilane, 1,3,5,7-tetramethylcyclotetra-siloxane, tetrakis(dimethyisiloxy)-silane, 1,1,3,3-tetramethyldisiloxane, and 1,3,5,7,9-pentamethylcyclo-pentasiloxane were purchased from Aldrich Chemical Co., Milwaukee, WI, Huls America Inc., Piscataway, NJ or PCR Inc. Gainesville, FL. Trifluoroethanol and n-heptafluoro-butanol were obtained from PCR Inc. Si(OCH₂CF₃)₄, Si(OCH₂(CF₂)CF₃)₄, HSi(OCH₂CF₃)₃, CH₂=CHSi(OCH₂CF₃)₃,
Si(CH₂CH₂CH₂Si(CH₃)₂CH₂CH=CH₂)₄, Si(CH₂CH₂CH₂SiCH₃(CH₂CH=CH₂)₂)₄, and Si(CH₂CH₂CH₂Si(CH₂CH=CH₂)₃)₄ were synthesized by slight modifications of published procedures. Platinum divinylsiloxane complex (3-3.5% Pt concentration in xylene, Huls PC072) was obtained from Huls America Inc. and diluted 5:1 by volume (toluene, Pt complex) prior to use. Toluene and tetrahydrofuran was reagent grade and purified by distillation from calcium hydride prior to use. Tetraallysilane was synthesized by a modification of a published procedure (J. Organomet. Chem., 84 (1975), pp 199-229). Vinylpolyfluoroalkanes were prepared from I(CF₂)₆I available from PCR Inc. "FLUORINERT" FC-75™ and "FLUORINERT" FC-40™ solvents were obtained from PCR Inc. Hexafluorobenzene was obtained from Aldrich Chemical, Inc. The mass spectroscopy experiments were performed on a Finnigan 4615B GC/MS quadrupole mass spectrometer (San Jose, CA). An electron impact source configuration operating at 200°C and a source pressure of 1.0 x 10⁻⁶ Torr was used. The mass spectrometer was scanned at a rate of about 1000 Daltons/second. All mass spectral peaks were recorded as sum of the ion plus potassium (M + 39). Proton and carbon NMR were determined on a GE model QE-300 instrument. Elemental analyses were performed by Oneida Research Services Inc., One Halsey Road, Whitesboro, NY.

The following are abbreviations used in the description and the examples:
Et - ethyl
FBS = tetra(heptafluorobutoxy)silane, Si(OCH₂C₃F₇)₄
FC-75 = perfluoro(butyl THF)
FES = tetra(trifluoroethoxy)silane, Si(OCH₂CF₃)₄
HFB = hexafluorobenzene, C₆F₆
HFBS = tri(heptafluorobutoxy)silane, HSi(OCH₂C₃F₇)₃
Me = methyl, CH₃
PP-11 = perfluoro phenanthrene
TEOS = tetraethoxysilane, Si(OCH₂CH₃)₄
TFA = trifluoroacetic acid, CF₃COOH
THF = tetrahydrofuran

### EXAMPLE 1

### Synthesis of Si(CH₂CH₂Si(OCH₂CF₃)₃)₄

A mixture of 2.39 g (7.34 mmol) of HSi(OCH₂CF₃)₃, 2 drops of Pt catalyst and 0.255 g (1.87 mmol) of tetravinylsilane was heated to 90°C for 6 hr. After cooling, the residual silane was removed in vacuo leaving a brownish oil which was identified as Si(CH₂CH₂Si(OCH₂CF₃)₃)₄. MS (m/3) 1480 (M + 39, 100 %), 1153 ((H₂C=CH)Si(CH₂CH₂Si(OCH₂CF₃)₃)₃ + 39, 20%). ¹³C NMR(C₆D₆) 1.31, 1.86, 2.31, 2.53 (SiCH₂), 61.8 (q, CH₂CF₃, ²J(CF)= 36.6 Hz), 124.53 (q, CF₃, ¹J(CF)= 277.9 Hz). Small amounts of -SiCH(CH₃)Si(OCH₂CF₃)₃ groups due to Markovnikov addition (-0.55, 7.79 ppm) were observed.

### EXAMPLE 2

### Synthesis of Si(CH₂CH₂Si(OCH₂(CF₂)₂CF₃)₃)₄

The reaction was performed in a manner similar to Example 1 using 0.250 g (1.83 mmol) of tetravinylsilane and 4.597 g (7.34 mmol) of HSi(OCH₂(CF₂)₂CF₃)₃. Workup yielded Si(CH₂CH₂Si(OCH₂(CF₂)₂CF₃)₃)₄ as a brownish oil. ¹³C NMR(THF-d₈) 1.47, 2.06, 2.32, 2.64 (SiCH₂), 61.5 (t, CH₂CF₂, ²J(CF)=27.2 Hz), 110-120 (M, (CF₂)₂CF₃). Small amounts of - SiCH(CH₃)Si(OCH₂(CF₂)₂CF₃)₃ groups due to Markovnikov addition (-0.4, 7.87 ppm) were observed.

### EXAMPLE 3

### Synthesis of Si(OSi(CH₃)₂CH₂CH₂Si(OCH₂CF₃)₃)₄

A solution consisting of 0.497 g (1.51 mmol) of Si(OSi(CH₃)₂H)₄, 2.149 g (6.10 mmol) of CH₂=CHSi(OCH₂CF₃)₃ and two drops of Pt catalyst was heated to 90°C for 6 hr. After cooling, the solution was stirred an additional 16 hr at room temperature. Removal of all volatiles in vacuo gave the product, Si(OSi(CH₃)₂CH₂CH₂Si(OCH₂CF₃)₃)₄, in quantitative yield. Small amounts of -SiCH(CH₃)Si(OCH₂CF₃)₃ groups due to Markovnikov addition were also observed by NMR. ¹³C NMR(C₆D₆) -0.636, -0.603 (major isomer, CH₃Si), 1.47 (minor isomer, CH₃Si), 2.10 (SiCH₂), 7.37 (SiCH), 7.40 (CH₃CH), 9.03 (SiCH₂), 62.14 (q (major), CH₂CF₃, ²J(CF)= 36.5 Hz), 62.21 (q (minor), CH₂CF₃, ²J(CF)= 36.5 Hz), 125.16 (q, CF₃, ¹J(CF)= 277.7 Hz). MS (m/e) 1736 (M + 39, 100%)

### EXAMPLE 4

### Synthesis of Si(OSi(CH₃)₂CH₂CH₂Si(OCH₂(CF₂)₂CF₃)₃)₄

The reaction was performed in a manner similar to Example 3 using 10.049 g (15.4 mmol) of CH₂=CHSi(OCH₂(CF₂)₂CF₃)₃, 1.241 g (3.78 mmol) of Si(OSi(CH₃)₂H)₄, and three drops of Pt catalyst in 10 ml of toluene. Workup yielded 9.95 g (90%) of Si(OSi(CH₃)₂CH₂CH₂Si(OCH₂(CF₂)₂CF₃)₃)₄ as the sole product. ¹³C NMR(THF-d₈) -0.797, -0.753 (major isomer, CH₃Si), 1.03, 1.40, 1.48 (minor isomer, CH₃Si), 2.04 (SiCH₂), 6.62 (SiCH), 7.30 (CH₃CH), 8.89, 8.93 (SiCH₂), 61.61 (t, CH₂CF₃, ²J(CF)= 27.6 Hz), 105-120 (m, CF₃(CF₂)₂). MS (m/e) 2975 (M+39).

### EXAMPLE 5

### Synthesis of Si(OSi(CH₃)₂CH₂CH₂CH₂Si(OCH₂CF₃)₃)₄

A mixture consisting of 3.003 g (8.20 mmol) of CH₂=CHCH₂Si(OCH₂CF₃)₃, 0.672 g (2.04 mmol) of Si(OSi(CH₃)₂H)₄ and one drop of Pt catalyst was heated to 90°C for 4 hrs, then cooled and stirred at room temperature for 16 hr. The volatiles were removed in vacuo leaving 3.44 g (94%) of a yellow tinted liquid identified as Si(OSi(CH₃)₂CH₂CH₂CH₂Si(OCH₂CF₃)₃)₄. ¹H NMR (C₆D₆) 0.26 (s, 6H), 0.72 (m, 4H), 1.61 (m, 2H), 3.71 (q, 6H). ¹³C NMR (C₆D₆) -0.53, -0.12 (s, SiCH₃), 14.07, 16.78, 16.81 (SiCH₂), 61.53 (q, CH₂CF₃, ²J(CF)= 36.5 Hz). A small amount of Markovnikov addition product was also observed by NMR.

### EXAMPLE 6

### Synthesis of cyclo-((CH₃)(CF₃CH₂O)₃SiCH₂CH₂CH₂)SiO₄)

A mixture consisting of 3.595 g (9.82 mmol) of cyclo-CH₂=CHCH₂Si(OCH₂CF₃)₃, 0.525 g (2.18 mmol) of ((CH₃)(H)SiO)₄ and one drop of Pt catalyst was heated to 90°C for 4 hrs, then cooled and stirred at room temperature for 16 hr. The volatiles were removed in vacuo leaving 3.94 g of a brown-tinted liquid identified as cyclo-((CH₃)(CF₃CH₂O)₃SiCH₂CH₂CH₂)SiO)₄. ¹H NMR (C₆D₆) 0.30 (m, 6H), 0.75 (m, 4H), 1.62 (m, 2H), 3.60 (q, 6H). ¹³C NMR (C₆D₆) -1.12 (s, SiCH₃), 13.67, 16.58, 21.41 (SiCH₂), 61.52 (q, CH₂CF₃, ²J(CF)=36.3 Hz). Some minor peaks were observed in the ¹³C NMR due to Markovnikov addition products.

### EXAMPLE 7

### Synthesis of cyclo-((CH₃)(CF₃CH₂O)₃SiCH₂CH₂CH₂)SiO₅)

A mixture consisting of 3.003 g (8.20 mmol) of CH₂=CHCH₂Si(OCH₂CF₃)₃, 0.493 g (1.64 mmol) of cyclo-((CH₃)(H)SiO)₅ and one drop of Pt catalyst was heated to 90°C for 4 hrs, then cooled and stirred at room temperature for 16 hr. The volatiles were removed in vacuo leaving 3.11 g (89%) of a thick yellow-tinted liquid identified as cyclo-((CH₃)(CF₃CH₂O)₃SiCH₂CH₂CH₂)SiO)₅. ¹H NMR (THF-d₈) 0.18 (s, 3H), 0.68 (m, 2H), 0.90 (m, 2H), 1.59 (m, 2H), 4.22 (q, 6H). A small amount of Markovnikov addition product was also observed by NMR.

### EXAMPLE 8

### Synthesis of cyclo-((CH₃)((CF₃CH₂O)₃SiCH₂CH₂)SiO)₄

The reaction was performed in a similar manner to Example 3 using 0.525 g (1.53 mmol) of cyclo-((CH₃)(CH₂=CH)SiO)₄, 2.00 g (6.22 mmol) of HSi(OCH₂CF₃)₃ and two drops of Pt catalyst. Workup yielded ((CH₃)((CF₃CH₂O)₃SiCH₂CH₂)SiO)₄ as an oil. Some trisubstituted product was observed in the mass spectrum. ¹³C NMR(C₆D₆) -1.38, -1.29 (s, CH₃Si), 1.90 (SiCH₂), 7.95 (SiCH₂), 62.14 (q (major), CH₂CF₃, ²J(CF)= 36.5 Hz), 61.83 (q (minor), CH₂CF₃, 2J(CF)= 36.6 Hz), 124.53 (q, CF₃, ¹J(CF)= 278.0 Hz). MS (m/e) 1687 (M + 39, 100%), 1361 (trisubstituted product + 39, 12%).

### EXAMPLE 9

### Synthesis of cyclo-((CH₃)(CF₃(CF₂)₂CH₂O)₃SiCH₂CH₂)SiO₄)

This reaction was performed in a manner similar to that in Example 3 using 0.500 g (1.45 mmol) of cyclo-((CH₃)(CH₂=CH)SiO)₄, 3.64 g (5.81 mmol) of HSi(OCH₂(CF₂)₂CF₃)₃ and two drops of Pt catalyst. Workup yielded ((CH₃)((CF₃(CF₂)₂CH₂O)₃SiCH₂CH₂)SiO)₄ as an oil. Some trisubstituted product (4-5%) was observed by NMR. ¹³C NMR(THF-d₈) -1.70, -1.65(s, CH₃Si), 1.75 (SiCH₂), 7.80, 7.88 (SiCH₂), 61.55 (t, CH₂CF₃, ²J(CF)= 27.6 Hz), 105-120 (m, CF₃(CF₂)₂).

### EXAMPLE 10

### Synthesis of (CF₃CH₂O)₃SiCH₂CH₂(CF₂)₆CH₂CH₂Si(OCH₂CF₃)₃

This preparation was done in a manner similar to Example 3 using 0.258 g (0.782 mmol) of (CH₂=CH(CF₂)₃)₂, 0.526 g (1.61 mmol) of HSi(OCH₂CF₃)₃ and two drops of Pt catalyst. Workup yielded ((CF₃CH₂O)₃SiCH₂CH₂(CF₂)₃)₂ as the sole product by NMR. ¹H NMR(C₆D₆) 0.68-0.79, 2.0-2.1 (m, AA'BB' pattern, SiCH₂CH₂Si), 3.51 (q, CH₂CF₃). ¹³C NMR(C₆D₆) 0.685 (s, CH₂Si), 25.03 (t, CH₂CF₂), 61.74 (q, CH₂CF₃, 2J(CF)= 34.8 Hz), 105-120 (m, (CF₂)₆), 124.28 (q, CF₃, ¹J(CF)= 277.9 Hz). MS (m/e) 1045 (M + 39, 100%).

### EXAMPLE 11

### Synthesis of (CF₃(CF₂)₂CH₂O)₃SiCH₂CH₂(CF₂)₆CH₂CH₂Si(OCH₂(CF₂)₂CF₃)₃

This preparation was done in a manner similar to Example 3 using 0.252 g (0.713 mmol) of CH₂=CH(CF₂)₆CH=CH₂, 0.998 g (1.59 mmol) of HSi(OCH₂(CF₂)₂CF₃)₃ and three drops of Pt catalyst. The mixture was heated to 120°C for 12 hr. Workup yielded (CF₃(CF₂)₂CH₂O)₃SiCH₂CH₂(CF₂)₆CH₂CH₂Si(OCH₂(CF₂)₂CF₃)₃ as the sole product by NMR. ¹H NMR (THF-d₈) 1.1-1.3, 2.18-2.4 (m, AA'BB' pattern, SiCH₂CH₂Si), 4.48 (t, CH₂CF₂). ¹³C NMR(THF-d₈) 0.678 (s, CH₂Si), 61.64 (t, OCH₂CF₂, ²J(CF)= 27.8 Hz), 105-120 (m, CF₂, CF₃), resonance for CH₂CF₂ is about 25 ppm and is obscured by solvent. MS (m/e) 1645 (M + 39, 100%), 1019 (monosubstituted product + 39,2%).

### EXAMPLE 12

### Synthesis of (CF₃CH₂O)₃Si(CH₂)₆(CF₂)₆(CH₂)₆Si(OCH₂CF₃)₃

A mixture consisting of 2.002 g (4.29 mmol) of (CH₂=CH(CH₂)₄(CF₂)₃)₂, 2.82 g (8.64 mmol) of HSi(OCH₂CF₃)₃ and 10 microliters of Pt catalyst was heated to 90°C for 4 hr, cooled and stirred for 16 h. The excess silane was removed in vacuo yielding 3.98 g (83%) of a thick liquid identified as (CF₃CH₂O)₃Si(CH₂)₆(CF₂)₆(CH₂)₆Si(OCH₂CF₃)₃. ¹H NMR (C₆D₆) 0.42 (m, SiCH₂), 0.82-1.09 (m, CH₂CH₂), 1.20 (m, CH₂), 1.38 (m, CH₂), 1.62-1.90 (m, CH₂CF₂), 3.59 (q, CH₂CF₃). ¹³C NMR (C₆D₆) 9.66 (CH₂Si), 20.59, 22.19 28.89 (CH₂), 31.0 (t, CH₂CF₂), 32.6 (CH₂), 61.54 (q, CH₂CF₃, ²J(CF)= 36.5 Hz), 124 (q, CF₃).

### EXAMPLE 13

### Synthesis of (CF₃(CF₂)₂CH₂O)₃Si(CH₂)₆(CF₂)₆(CH₂)₆Si(OCH₂(CF₂)₂CF₃)₃

A mixture consisting of 1.254 g (2.69 mmol) of (CH₂=CH(CH₂)₄(CF₂)₃)₂, 3.37 g (5.38 mmol) of HSi(OCH₂(CF₂)₂CF₃)₃ and 10 microliters of Pt catalyst was heated to 90°C for 4 hr, cooled and stirred for 16 h. The excess silane was removed in vacuo yielding 3.69 g (97%) of a thick, colorless liquid identified as (CF₃(CF₂)₂CH₂O)₃Si(CH₂)₆(CF₂)₆(CH₂)₆Si(OCH₂(CF₂)₂CF₃)₃. ¹H NMR (THF-d₈) 0.90 (m, SiCH₂), 1.40 (m, CH₂), 1.40-1.68 (m,(CH₂)₃), 2.03-2.23 (m, CH₂CF₂), 4.40 (t, CH₂CF₂). ¹³C NMR(C6D6) 9.73 (CH₂Si), 21.04, 22.63, 29.49 (CH₂), 31.66 (t,CH₂CF₂), 33.22 (CH₂), 61.35 (t, CH₂CF₃, ²J(CF) = 24.7Hz), 107-120 (q, CF₂ resonances).

### EXAMPLE 14

### Synthesis of Si(CH₂CH₂CH₂Si(CH₃)₂CH₂CH₂CH₂Si(OCH₂CH₃)₃)₄

Triethoxysilane (5.567 g, 0.034 mol) was added to 5.023 g (8.47 mmol) of Si(CH₂CH₂CH₂Si(CH₃)₂CH₂CH=CH₂)₄ and 50 microliters of Pt catalyst and heated to reflux for 5 hr. After cooling, an additional 2.796 g (0.0017 mol) of triethoxysilane and one drop of Pt catalyst solution was added, and the solution was refluxed an additional 8 hr and cooled. The excess triethoxysilane was removed in vacuo leaving 7.78 g (74%) of a tea colored liquid identified as Si(CH₂CH₂CH₂Si(CH₃)₂CH₂CH₂CH₂Si(OCH₂CH₃)₃)₄. Approximately 20% of product due to Markovnikov addition were observed. ¹H NMR(C₆D₆) -0.01 (s, SiCH₃), 0.19 (s, SiCH₃ Markovnikov product), 0.58-0.86 (m, CH₂), 1.15 (t, OCH₂), 1.4-1.8 (m, CH₂), 3.76 (q, CH₃). ¹³C NMR(C₆D₆) -2.59 (SiCH₃), -2.17 (SiCH₃, Markovnikov product), 16.14, 18.52, 19.62, 20.40, 21.21 (CH₂), 19.08 (CH₃), 58.7 (OCH₂).

### EXAMPLE 15

Synthesis of Si(CH₂CH₂CH₂Si(CH₃)₂CH₂CH₂CH₂Si(OCH₂CF₃)₃)₄

To a mixture containing 1.998 g (3.37 mmol) of Si(CH₂CH₂CH₂Si(CH₃)₂CH₂CH=CH₂)₄ and 30 microliters of Pt catalyst solution was added 6.602 g (0.020 mol) of HSi(OCH₂CF₃)₃ dropwise over a period of 0.5 hr. After the addition, the mixture was heated to 90°C for 6 hr and stirred at room temperature for 16 hr. After removing the excess silane in vacuo, and filtering through activated charcoal, 57.4 g (90%) of Si(CH₂CH₂CH₂Si(CH₃)₂CH₂CH₂CH₂Si(OCH₂CF₃)₃)₄ was obtained as a thick tea-colored liquid. ¹H NMR(C₆D₆) 0.08 (s, SiCH₃), 0.51-0.84 (m, CH₂), 1.40-1.62 (m, CH₂), 3.70 (q, CH₂CF₃). ¹³C NMR(C₆D₆) -3.04 (SiCH₃), 14.24, 17.11, 18.50, 19.55, 19.93, 20.98 (CH₂), 61.52 (CH₂CF₃, ²J(CF)= 36.6 Hz), 124.5 (CF₃, ¹J(CF)=278 Hz).

### EXAMPLE 16

### Synthesis of Si(CH₂CH₂CH₂SiCH₃(CH₂CH₂CH₂Si(OCH₂CH₃)₃)₂)₄

A mixture containing 5.011 g (7.18 mmol) of Si(CH₂CH₂CH₂SiCH₃(CH₂CH=CH₂)₂)₄, 7.035 g (0.043 mol) of triethoxysilane and 30 microliters of Pt catalyst solution was heated to reflux for 5 hr. After checking by NMR, an additional 2.364 g (0.014 mol) of triethoxysilane and 1 drop of Pt catalyst solution were added, and the resulting mixture was refluxed for 8 hr. After cooling and removing the excess silane in vacuo, 10.74 g (74%) of Si(CH₂CH₂CH₂SiCH₃(CH₂CH₂CH₂Si(OCH₂CH₃)₃)₂)₄ was obtained as a tea-colored liquid. Aproximately 20% of product due to Markovnikov addition were observed. ¹H NMR (C₆D₆) -0.02 (s, SiCH₃), 0.08 (s, SiCH₃) Markovnikov product) 0.58-0.82 (m, CH₂), 1.13 (t, CH₃), 1.38-1.80 (m, CH₂), 3.77 (q, CH₂CH₃). ¹³C NMR(C₆D₆) -4.40 (SiCH₃), -4.14 (SiCH₃ Markovnikov), 16.25, 18.57, 18.70, 18.78, 19.62, 20.33 (CH₂), 19.07 (CH₃), 59.78 (OCH₂).

### EXAMPLE 17

### Synthesis of Si(CH₂CH₂CH₂SiCH₃(CH₂CH₂CH₂Si(OCH₂CF₃)₃)₂)₄

To a mixture containing 1.515 g (2.17 mmol) of Si(CH₂CH₂CH₂SiCH₃(CH₂CH=CH₂)₂)₄ and six drops of Pt catalyst solution dissolved in 20 ml of toluene was added 7.098 g (0.022 mol) of HSi(OCH₂CF₃)₃ dropwise over a period of 0.5 hr. After the addition, the mixture was heated to 100°C for 8 hr. After cooling, NMR showed the reaction to be incomplete and an additional 0.718 g (2.2 mmol) of HSi(OCH₂CF₃)₃ and 1 drop of Pt catalyst were added. This mixture was heated to 110°C for 6 hr and stirred at room temperature for 64 hr. After removing the excess silane in vacuo, 5.23 g (73%) of Si(CH₂CH₂CH₂SiCH₃(CH₂CH₂CH₂Si(OCH₂CF₃)₃)₂)₄ was obtained as a thick orange-tinted liquid. ¹³C NMR(C₆D₆) -5.07 (SiCH₃), 14.35, 17.48, 18.42, 19.50, 19.62, 23.08 (CH₂), 61.90 (CH₂CF₃, ²J(CF)=36.7 Hz), 124.6 (CF₃, ¹J(CF)= 278 Hz).

### EXAMPLE 18

### Synthesis of Si(CH₂CH₂CH₂Si(CH₂CH₂CH₂Si(OCH₂CF₃)₃)₃)₄

A mixture containing 1.853 g (2.31 mmol) of Si(CH₂CH₂CH₂Si(CH₂CH=CH₂)₃)₄, 12.091 g (37.07 mmol) of HSi(OCH₂CF₃)₃, and 10 drops of Pt catalyst solution in 10 ml of toluene was heated to reflux for 6 hr followed by stirring at room temperature for 90 hr. The mixture was heated an additional 4 hr and cooled. After removing the excess silane in vacuo, 7.92 g (73%) of Si(CH₂CH₂CH₂Si(CH₂CH₂CH₂Si(OCH₂CF₃)₃)₃)₄ was obtained as a thick orange-tinted liquid. ¹H NMR (toluene-d₈) 0.59-1.00 (m, CH₂), 1.40-1.75 (m, CH₂), 3.82 (broad q, CH₂CF₃). ¹³C NMR(C₆D₆) 14.08, 16.53, 17.18, 18.0, 18.5, (CH₂, remaining line obscured by toluene), 61.30 (CH₂CF₃, ²J(CF)= 36.6 Hz), 124.2 (CF₃, ¹J(CF)=278 Hz).

### EXAMPLE 19

### Preparation of Polysilicates from FBS

FBS/2-propanol/deionized water/0.5% CsF in 2-propanol were combined with mixing in the sequence given at the following levels by weight, 82.2%/14.2%/2.4%/1.2%. The final solution contained a water/FBS molar ratio of 1.33 and 6.07 wt. % solids. This solution was heated slowly for two hours until volatile products could be removed by distillation. After 30 min. of distillation, the flask was allowed to cool and the contents analyzed by gas chromatography. The analysis indicated that water had essentially completely reacted. The cooled material was allowed to evaporate at room temperature until it had lost 35% of its original weight.

The concentrated material was used to make up solutions in hexafluorobenzene (8.6%) and in FC-75™(8.9%). Both were very homogeneous and formed clear films when flow or dip coated on glass slides.

Silicon-29 NMR was run on the concentrate and indicated substantial reaction of the starting material (ca. 90%) to form a broad range of polysilicates with Q1 through Q4 structures (Si atom has 1 to 4 bonds to other Si atoms through oxygen). (May of the species must contain residual fluorine-bearing groups in order for the solubility in fluorinated solvents to be observed.)

## Claims

1. A compound having the formula
X(Si(OCₐH₂ₐR_{f})₃)ₙ I
wherein:
X is at least one organic link selected from the group consisting of:
(a) R¹ₘSiY₄₋ₘ;
(b) ring structures 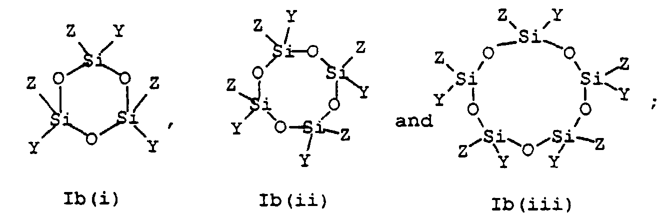
(c) R¹ₘSi(OSi(CH₃)₂Y)₄₋ₘ;
(d) CH₃SiY₂OSiY₂CH₃;
(e) Y₃SiOSiY₃;
(f) Y₂(CH₃)Si(CH₂)_{b}Si(CH₃)Y₂;
(g) Y₃Si(CH₂)_{b}SiY₃;
(h) Y₃SiC₆H₄SiY₃;
(i) substituted benzene, including all isomers, selected from the group consisting of:
(i) C₆H₃(SiZ_{3-c}Y_{c})₃;
(ii) C₆H₂(SiZ_{3-c}Y_{c})₄;
(iii) C₆H(SiZ_{3-c}Y_{c})₅; and
(iv) C₆(SiZ_{3-c}Y_{c})₆; and
(j) substituted cyclohexane, including all stereoisomers, selected from the group consisting of:
(i) 1,2-C₆H₁₀(Y)₂; 1,3-C₆H₁₀(Y)₂; 1,4-C₆H₁₀(Y)₂;
(ii) 1,2,4-C₆H₉(Y)₃; 1,2,3-C₆H₉(Y)₃; 1,3,5-C₆H₉(Y)₃;
(iii) 1,2,3,4-C₆H₈(Y)₄; 1,2,4,5-C₆H₈(Y)₄; 1,2,3,5-C₆H₉(Y)₄;
(iv) 1,2,3,4,5-C₆H₇(Y)₅; and
(v) C₆H₆(Y)₆;
(k) Y(CF₂)ᵥY
R_{f} has up to 18 carbon atoms and is selected from the group consisting of:
(a) C₁ to C₁₈ perfluoroalkyl;
(b) -[CF₂CF(CF₃)O]ᵣ-CF₂CF₂CF₃, wherein r is an integer of at least 1;
(c) -CF₂-(CF₂-O)_{q}-CF₃, wherein q is an integer of at least 2; and
(d) -CH₂-C(CF₃)₂-CF₂-CF₂-CF₃;
wherein up to 50% of the fluorine of the R_{f} group is optionally substituted with hydrogen;
a is an integer from 1 to 10;
b is an integer from 1 to 10;
c is 1, 2 or 3;
m is 0,1 or 2;
n is an integer greater than or equal to 2;
v is an even integer from 2 to 14;
R¹ is C₁ to C₈ alkyl or aryl;
Y is -(CR²R³)ₖCR⁴R⁵CR⁶R⁷(CR⁸R⁹)ₕ-
R² to R⁹ are each independently hydrogen, C₁ to about C₈ alkyl, or aryl, provided that at least one of R⁴ to R⁷ is hydrogen;
k and h are each independently an integer from 0 to 10, provided that at least one of k or h is zero;
Z is C₁ to C₄ alkyl, 3,3,3-trifluoropropyl, aralkyl or aryl.

2. The compound of Clam 1 wherein X is selected from the group consisting of: R¹ₘSiY₄₋ₘ; 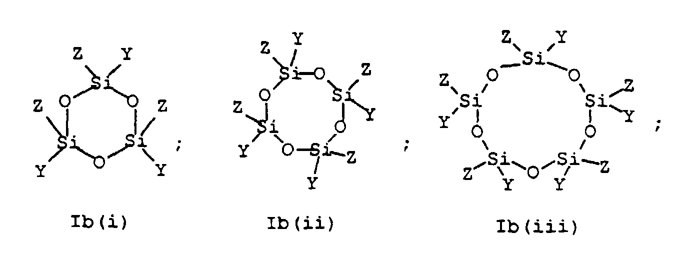 R¹ₘSi(OSi(CH₃)₂Y)₄₋ₘ and Y(CF₂)ᵥY; and R_{f} is CF₃, C₂F₅ or C₃F₇.

3. The compound of Claim 2 selected from the group consisting of:
Si(CH₂CH₂Si(OCH₂CF₃)₃)₄;
Si(CH₂CH₂Si(OCH₂CF₂CF₃)₃)₄;
Si(CH₂CH₂Si(OCH₂(CF₂)₂CF₃)₃)₄;
Si(OSi(CH₃)₂CH₂CH₂Si(OCH₂CF₃)₃)₄;
Si(OSi(CH₃)₂CH₂CH₂Si(OCH₂(CF₂)₂CF₃)₃)₄;
Si(OSi(CH₃)₂CH₂CH₂CH₂Si(OCH₂CF₃)₃)₄;
cyclo-((CH₃)(CF₃CH₂O)₃SiCH₂CH₂)SiO)₄;
cyclo-((CH₃)(CF₃CH₂O)₃SiCH₂CH₂CH₂)SiO)₄;
cyclo-((CH₃)(CF₃CH₂O)₃SiCH₂CH₂CH₂)SiO)₅;
cyclo((CH₃)(CF₃(CF₂)₂CH₂O)₃SiCH₂CH₂)SiO)₄;
(CF₃CH₂O)₃SiCH₂CH₂(CF₂)₆CH₂CH₂Si(OCH₂CF₃)₃;
(CF₃(CF₂)₂CH₂O)₃SiCH₂CH₂(CF₂)₆CH₂CH₂Si(OCH₂(CF₂)₂CF₃)₃;
and
(CF₃CH₂O)₃Si(CH₂)₆(CF₂)₆(CH₂)₆Si(OCH₂CF₃)₃.

4. A compound having the formula I
X(R¹⁰Si(OCₐH₂ₐR_{f})₂)ₙ IA
wherein:
X is at least one organic link selected from the group consisting of:
(a) R¹ₘSiY₄₋ₘ;
(b) ring structures 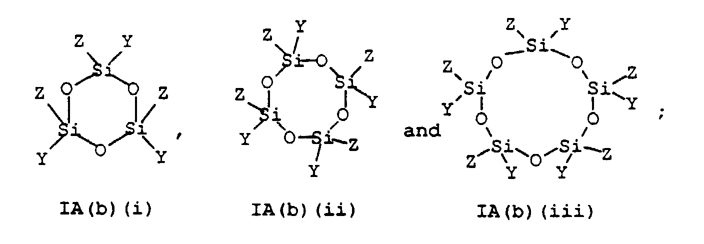
(c) R¹ₘSi(OSi(CH₃)₂Y)₄₋ₘ;
(d) CH₃SiY₂OSiY₂CH₃;
(e) Y₃SiOSiY₃;
(f) Y₂(CH₃)Si(CH₂)_{b}Si(CH₃)Y₂;
(g) Y₃Si(CH₂)_{b}SiY₃;
(h) Y₃SiC₆H₄SiY₃;
(i) substituted benzene, including all isomers, selected from the group consisting of:
(i) C₆H₃(SiZ_{3-c}Y_{c})₃;
(ii) C₆H₂(SiZ_{3-c}Y_{c})₄;
(iii) C₆H(SiZ_{3-c}Y_{c})₅; and
(iv) C₆(SiZ_{3-c}Y_{c})₆; and
(j) substituted cyclohexane, including all stereoisomers, selected from the group consisting of:
(i) 1,2-C₆H₁₀(Y)₂; 1,3-C₆H₁₀(Y)₂; 1,4-C₆H₁₀(Y)₂;
(ii) 1,2,4-C₆H₉(Y)₃; 1,2,3-C₆H₉(Y)₃; 1,3,5-C₆H₉(Y)₃;
(iii) 1,2,3,4-C₆H₈(Y)₄; 1,2,4,5-C₆H₈(Y)₄;
1,2,3,5-C₆H₉(Y)₄;
(iv) 1,2,3,4,5-C₆H₇(Y)₅; and
(v) C₆H₆(Y)₆;
R_{f} has up to 18 carbon atoms and is selected from the group consisting of:
(a) C₁ to C₁₈ perfluoroalkyl;
(b) -[CF₂CF(CF₃)O]ᵣ-CF₂-CF₂-CF₃, wherein r is an integer of at least 1;
(c) -CF₂-(CF₂-O)_{q}-CF₃, wherein q is an integer of at least 2; and
(d) -CH₂-C(CF₃)₂-CF₂-CF₂-CF₃;
each R_{f} optionally substituted with one or more hydrogen;
Z is C₁ to C₄ alkyl, 3,3,3-trifluoropropyl, aralkyl or aryl;
Y is -(CR²R³)ₖCR⁴R⁵CR⁶R⁷(CR⁸R⁹)ₕ-;
R¹ is C₁ to C₈ alkyl or aryl;
R² to R⁹ are each independently hydrogen, C₁ to about C₈ alkyl or aryl, provided that at least one of R⁴ to R⁷ is hydrogen;
R¹⁰ is C₁ to C₈ alkyl or CₐH₂ₐR_{f};
m is 0, 1 or 2;
k and h are each independently an integer from 0 to 10, provided that at least one of k or h is zero;
a is an integer from 1 to 10;
b is an integer from 1 to 10;
c is 1, 2 or 3; and
n is an integer greater than or equal to 2.

5. The compound of Claim 4 wherein X is selected from the group consisting of: R¹ₘSiY₄₋ₘ; 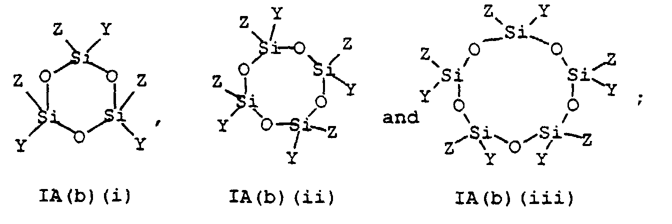 R¹ₘSi(OSi(CH₃)₂Y)₄₋ₘ and Y(CF₂)ᵥY; and R_{f} is CF₃, C₂F₅ or C₃F₇.

6. The compound of Claim 5 selected from the group consisting of:
Si(CH₂CH₂SiCH₃(OCH₂CF₃)₂)₄;
Si(CH₂CH₂SiCH₃(OCH₂(CF₂)₂CF₃)₂)₄;
Si(OSi(CH₃)₂CH₂CH₂SiCH₃(OCH₂CF₃)₂)₄;
Si(OSi(CH₃)₂CH₂CH₂SiCH₃(OCH₂(CF₂)₂CF₃)₂)₄;
Si(OSi(CH₃)₂CH₂CH₂CH₂SiCH₃(OCH₂CF₃)₂)₄;
(CF₃CH₂O)₂CH₃SiCH₂CH₂(CF₂)₆CH₂CH₂SiCH₃(OCH₂CF₃)₂;
(CF₃(CF₂)₂CH₂O)₂CH₃SiCH₂CH₂(CF₂)₆CH₂CH₂SiCH₃(OCH₂-(CF₂)₂CF₃)₂;
(CF₃CH₂O)₂CH₃Si(CH₂)₆(CF₂)₆(CH₂)₆SiCH₃(OCH₂CF₃)₂;
Si(CH₂CH₂Si(CH₂CH₂CF₂CF₃)(OCH₂CF₃)₂)₄;
Si(CH₂CH₂Si(CH₂CH₂CF₂CF₃)(OCH₂(CF₂)₂CF₃)₂)₄;
Si(OSi(CH₃)₂CH₂CH₂Si(CH₂CH₂CF₂CF₃)(OCH₂CF₃)₂)₄;
Si(OSi(CH₃)₂CH₂CH₂Si(CH₂CH₂CF₂CF₃)(OCH₂(CF₂)₂CF₃)₂)₄;
Si(OSi(CH₃)₂CH₂CH₂CH₂Si(CH₂CH₂CF₂CF₃)(OCH₂CF₃)₂)₄;
(CF₃CH₂O)₂(CF₃CF₂CH₂CH₂)SiCH₂CH₂(CF₂)₆CH₂CH₂Si(CH₂-CH₂CF₂CF₃)(OCH₂CF₃)₂;
(CF₃(CF₂)₂CH₂O)₂(CF₃CF₂CH₂CH₂)SiCH₂CH₂(CF₂)₆CH₂CH₂-Si(CH₂CH₂CF₂CF₃)(OCH₂(CF₂)₂CF₃)₃;
(CF₃CH₂O)₂(CF₃CF₂CH₂CH₂)Si(CH₂)₆(CF₂)₆(CH₂)₆Si(CH₂CH₂-CF₂CF₃)(OCH₂CF₃)₂; and
cyclo-((CH₃)(CF₃CH₂O)₂CH₃SiCH₂CH₂)SiO)₄;
cyclo-((CH₃)(CF₃CH₂O)₂CH₃SiCH₂CH₂CH₂)SiO)₄;
cyclo-((CH₃)(CF₃CH₂O)₂CH₃SiCH₂CH₂CH₂)SiO)₅; and
cyclo-((CH₃)(CF₃(CF₂)₂CH₂O)₂SiCH₂CH₂)SiO)₄.

7. A compound having the formula
Si[(CH₂)_{f}Si(CH₃)_{3-d}((CH₂)ₑSi(OR¹⁰))_{d}]₄ II
wherein:
d is 1, 2 or 3;
e is an integer from 2 to 10;
f is an integer from 2 to 10;
R¹⁰ is C₁ to C₈ alkyl or CₐH₂ₐR_{f};
R_{f} has up to 18 carbon atoms and is selected from the group consisting of:
(a) C₁ to C₁₈ perfluoroalkyl;
(b) -[CF₂CF(CF₃)O]ᵣ-CF₂-CF₂-CF₃, wherein r is an integer of at least 1;
(c) -CF₂-(CF₂-O)_{q}-CF₃, wherein q is an integer of at least 2; and
(d) -CH₂-C(CF₃)₂-CF₂-CF₂-CF₃;
wherein up to 50% of the fluorine of the R_{f} group is optionally substituted with hydrogen;
a is an integer from 1 to about 10.

8. The compound of Claim 7 wherein R¹⁰ is CₐH₂ₐR_{f}.

9. The compound of Claim 8 selected from the group consisting of:
Si(CH₂CH₂CH₂Si(CH₃)₂CH₂CH₂CH₂Si(OCH₂CH₃)₃)₄;
Si(CH₂CH₂CH₂Si(CH₃)₂CH₂CH₂CH₂Si(OCH₂CF₃)₃)₄;
Si(CH₂CH₂CH₂SiCH₃(CH₂CH₂CH₂Si(OCH₂CH₃)₃)₂)₄;
Si(CH₂CH₂CH₂SiCH₃(CH₂CH₂CH₂Si(OCH₂CF₃)₃)₂)₄; and
Si(CH₂CH₂CH₂Si(CH₂CH₂CH₂Si(OCH₂CF₃)₃)₃)₄.

10. An oligomeric compound having the formula
Si(OCₐH₂ₐR_{f})_{4-z}O_{z/2} III
wherein:
z is a number from 0.5 to 3.0;
a is an integer from 1 to 10; and
R_{f} has up to 18 carbon atoms and is selected from the group consisting of:
(a) C₁ to C₁₈ perfluoroalkyl;
(b) -[CF₂CF(CF₃)O]ᵣ-CF₂CF₂-CF₃, wherein r is a integer of at least 1;
(c) -CF₂-(CF₂-O)_{q}-CF₃, wherein q is an integer of at least 2; and
(d) -CH₂-C(CF₃)₂-CF₂-CF₂-CF₃;
wherein up to 50% of the fluorine of the R_{f} group is optionally substituted with hydrogen.

11. The compound of Claim 10 wherein R_{f} is CF₃, C₂F₅, or C₃F₇, and a is 1 or 2.

12. An oligomeric compound having the formula
R_{f}-(CH₂)_{y}-Si(OR¹⁴)_{3-z}O_{z/2} IV
wherein:
z is a number from 0.5 to 2.5;
y is an integer from 2 to 10;
each R¹⁴ is independently C₁ to C₈ alkyl, C₁ to C₁₀ carboxy, C₁ to C₁₀ fluorocarboxy or CₐH₂ₐR_{f};
a is an integer from 1 to 10; and
R_{f} has up to 18 carbon atom and is selected from the group consisting of:
(a) C₁ to C₁₈ perfluoroalkyl;
(b) -[CF₂CF(CF₃)O]ᵣ-CF₂-CF₂-CF₃, wherein r is an integer of at least 1;
(c) -CF₂-(CF₂-O)_{q}-CF₃, wherein q is an integer of at least 2; and
(d) -CH₂-C(CF₃)₂-CF₂-CF₂-CF₃;
wherein up to 50% of the fluorine of the R_{f} group is optionally substituted with hydrogen.

13. The oligomeric compound of Claim 12 wherein R_{f} is C₆F₁₃, n-C₈F₁₇ or n-C₁₀F₂₁ and a is 1 or 2.

## Patentansprüche

1. Verbindung mit der Formel
X(Si(OCₐH₂ₐR_{f})₃)ₙ (I),
wobei:
X wenigstens eine organische Verknüpfung ist, ausgewählt aus der Gruppe, bestehend aus:
(a) R¹ₘSiY₄₋ₘ;
(b) Ringstrukturen 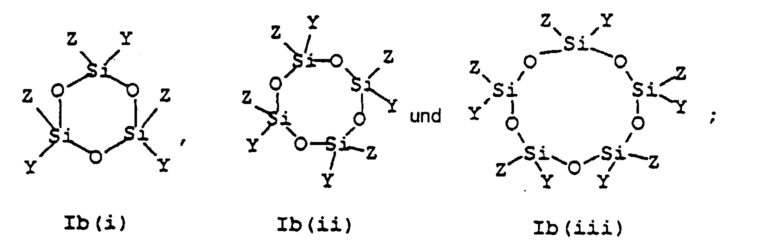
(c) R¹ₘSi(OSi(CH₃)₂Y)₄₋ₘ;
(d) CH₃SiY₂OSiY₂CH₃;
(e) Y₃SiOSiY₃;
(f) Y₂(CH₃)Si(CH₂)_{b}Si(CH₃)Y₂
(g) Y₃Si(CH₂)_{b}SiY₃;
(h) Y₃SiC₆H₄SiY₃;
(i) substituiertem Benzol, alle Isomere eingeschlossen, ausgewählt aus der Gruppe, bestehend aus:
(i) C₆H₃(SiZ_{3-c}Y_{c})₃;
(ii) C₆H₂(SiZ_{3-c}Y_{c})₄;
(iii) C₆H(SiZ_{3-c}Y_{c})₅; und (iv) C₆(SiZ_{3-c}Y_{c})₆; und
(j) substituiertem Cyclohexan, alle Stereoisomere eingeschlossen, ausgewählt aus der Gruppe, bestehend aus:
(i) 1,2-C₆H₁₀(Y)₂; 1,3-C₆H₁₀(Y)₂; 1,4-C₆H₁₀(Y)₂;
(ii) 1,2,4-C₆H₉(Y)₃; 1,2,3-C₆H₉(Y)₃; 1,3,5-C₆H₉(Y)₃;
(iii) 1,2,3,4-C₆H₈(Y)₄; 1,2,4,5-C₆H₈(Y)₄; 1,2,3,5-C₆H₉(Y)₄;
(iv) 1,2,3,4,5-C₆H₇(Y)₅; und
(v) C₆H₆(Y)₆;
(k) Y(CF₂)ᵥY;
R_{f} bis zu 18 Kohlenstoffatome aufweist und ausgewählt ist aus der Gruppe, bestehend aus:
(a) C₁- bis C₁₈-Perfluoralkyl,
(b) -[CF₂CF(CF₃)O]ᵣ-CF₂-CF₂-CF₃, wobei r eine ganze Zahl von wenigstens 1 ist,
(c) -CF₂-(CF₂-O)_{q}-CF₃, worin q eine ganze Zahl von wenigstens 2 ist und
(d) -CH₂-C(CF₃)₂-CF₂-CF₂-CF₃,
wobei bis zu 50% des Fluors der R_{f}-Gruppen wahlweise durch Wasserstoff ersetzt sind,
a eine ganze Zahl von 1 bis 10,
b eine ganze Zahl von 1 bis 10,
c 1, 2 oder 3,
m 0,1 oder 2,
n eine ganze Zahl größer oder gleich 2,
v eine gerade ganze Zahl von 2 bis 14,
R¹ ein C₁- bis C₈-Alkyl oder -Aryl ist,
Y -(CR²R³)ₖCR⁴R⁵CR⁶R⁷(CR⁸R⁹)ₕ -bedeutet,
R² bis R⁹ jeweils unabhängig voneinander Wasserstoff, C₁- bis etwa C₈-Alkyl oder Aryl sind, vorausgesetzt, daß wenigstens einer der Reste von R⁴ bis R⁷ Wasserstoff ist,
k und h jeweils unabhängig voneinander eine ganze Zahl von 0 bis 10 sind, vorausgesetzt, daß wenigstens eines von k oder h 0 ist,
Z C₁- bis C₄-Alkyl, 3,3,3-Trifluororopyl, Aralkyl oder Aryl sind.

2. Verbindung nach Anspruch 1, wobei X ausgewählt ist aus der Gruppe, bestehend aus: R¹ₘSiY₄₋ₘ, 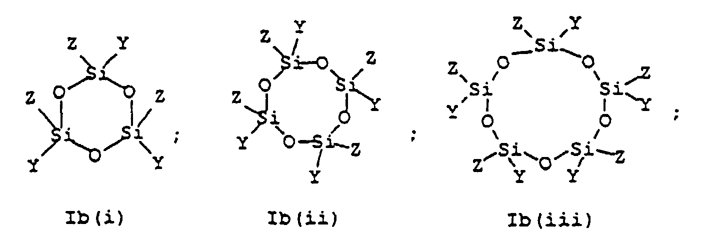 R¹ₘSi(OSi(CH₃)₂Y)₄₋ₘ und Y(CF₂)ᵥY; und wobei R_{f} CF₃, C₂F₅ oder C₃F₇ ist.

3. Verbindung nach Anspruch 2, ausgewählt aus der Gruppe, bestehend aus:
Si(CH₂CH₂Si(OCH₂CF₃)₃)₄;
Si(CH₂CH₂Si(OCH₂CF₂CF₃)₃)₄;
Si(CH₂CH₂Si(OCH₂(CF₂)₂CF₃)₃)₄;
Si(OSi(CH₃)₂CH₂CH₂Si(OCH₂CF₃)₃)₄;
Si(OSi(CH₃)₂CH₂CH₂Si(OCH₂(CF₂)₂CF₃)₃)₄;
Si(OSi(CH₃)₂CH₂CH₂CH₂Si(OCH₂CF₃)₃)₄;
Cyclo-((CH₃)(CF₃CH₂O)₃SiCH₂CH₂)SiO)₄;
Cyclo-((CH₃)(CF₃CH₂O)₃SiCH₂CH₂CH₂)SiO)₄;
Cyclo-((CH₃)(CF₃CH₂O)₃SiCH₂CH₂CH₂)SiO)₅;
Cyclo-((CH₃)(CF₃(CF₂)₂CH₂O)₃SiCH₂CH₂)SiO)₄;
(CF₃CH₂O)₃SiCH₂CH₂(CF₂)₆CH₂CH₂Si(OCH₂CF₃)₃;
(CF₃(CF₂)₂CH₂O)₃SiCH₂CH₂(CF₂)₆CH₂CH₂Si(OCH₂(CF₂)₂CF₃)₃; und
(CF₃CH₂O)₃Si(CH₂)₆(CF₂)₆(CH₂)₆Si(OCH₂CF₃)₃.

4. Verbindung mit der Formel I
X(R¹⁰Si(OCₐH₂ₐR_{f})₂)ₙ IA
wobei
X wenigstens eine organische Verknüpfung ist, ausgewählt aus der Gruppe, bestehend aus:
(a) R¹ₘSiY₄₋ₘ;
(b) Ringstrukturen 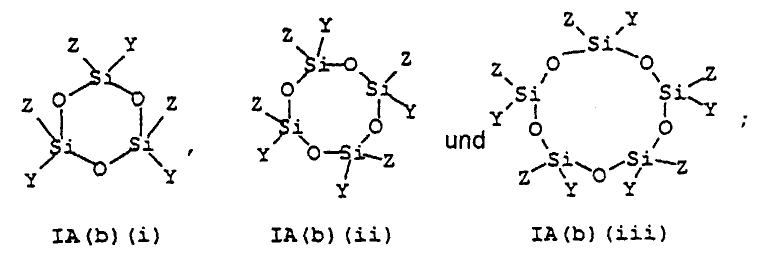
(c) R¹ₘSi(OSi(CH₃)₂Y)₄₋ₘ;
(d) CH₃SiY₂OSiY₂CH₃;
(e) Y₃SiOSiY₃;
(f) Y₂(CH₃)Si(CH₂)_{b}Si(CH₃)Y₂;
(g) Y₃Si(CH₂)_{b}SiY₃;
(h) Y₃SiC₆H₄SiY₃;
(i) substituiertem Benzol, alle Isomere eingeschlossen, ausgewählt aus der Gruppe, bestehend aus:
(i) C₆H₃(SiZ_{3-c}Y_{c})₃:
(ii) C₆H₂(SiZ_{3-c}Y_{c})₄;
(iii) C₆H(SiZ_{3-c}Y_{c})₅; und
(iv) C₆(SiZ_{3-c}Y_{c})₆; und
(j) substituiertem Cyclohexan, einschließlich aller Stereoisomere, ausgewählt aus der Gruppe, bestehend aus:
(i) 1,2-C₆H₁₀(Y)₂; 1,3-C₆H₁₀(Y)₂; 1,4-C₆H₁₀(Y)₂;
(ii) 1,2,4-C₆H₉(Y)₃; 1,2,3-C₆H₉(Y)₃; 1,3,5-C₆H₉(Y)₃;
(iii) 1,2,3,4-C₆H₈(Y)₄; 1,2,4,5-C₆H₈(Y)₄; 1,2,3,5-C₆H₉(Y)₄;
(iv) 1,2,3,4,5-C₆H₇(Y)₅; und
(v) C₆H₆(Y)₆;
R_{f} bis zu 18 Kohlenstoffatome aufweist und aus der Gruppe ausgewählt ist, bestehend aus:
(a) C₁- bis C₁₈-Perfluoralkyl;
(b) -[CF₂CF(CF₃)O]ᵣ-CF₂-CF₂-CF₃, wobei r eine ganze Zahl von mindestens 1 ist;
(c) -CF₂-(CF₂-O)_{q}-CF₃, wobei q eine ganze Zahl von mindestens 2 ist; und (d) -CH₂-C(CF₃)₂-CF₂-CF₂-CF₃;
jedes R_{f} fakultativ mit einem oder mehreren Wasserstoffatomen substituiert ist;
Z C₁- bis C₄-Alkyl, 3,3,3-Trifluorpropyl, Aralkyl oder Aryl ist;
Y -(CR²R³)ₖCR⁴R⁵CR⁶R⁷(CR⁸R⁹)ₕ-ist;
R¹ C₁- bis C₈-Alkyl oder -Aryl ist:
R² bis R⁹ jeweils unabhängig Wasserstoff, C₁ bis etwa C₈-Alkyl oder -Aryl ist, vorausgesetzt, daß mindestens einer der Reste von R⁴ bis R⁷ Wasserstoff ist:
R¹⁰ C₁ bis C₈-Alkyl oder CₐH₂ₐR_{f} ist;
m 0, 1 oder 2 ist;
k und h jeweils unabhängig eine ganze Zahl von 0 bis 10 sind, vorausgesetzt, daß mindestens eines von k oder h 0 ist;
a eine ganze Zahl von 1 bis 10 ist;
b eine ganze Zahl von 1 bis 10 ist;
c 1, 2 oder 3 ist; und
n eine ganze Zahl größer oder gleich 2 ist.

5. Verbindung nach Anspruch 4, wobei X aus der Gruppe ausgewählt ist, bestehend aus: R¹ₘSiY₄₋ₘ; 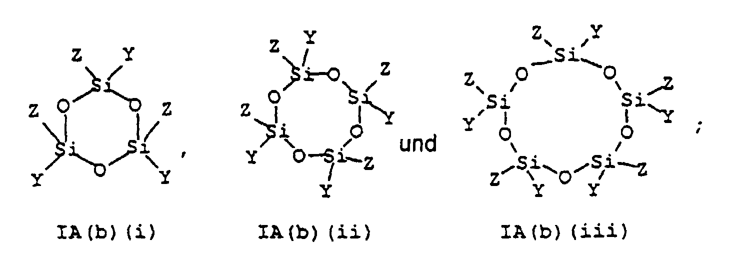 R¹ₘSi(OSi(CH₃)₂Y)₄₋ₘ und Y(CF₂)ᵥY; und R_{f} CF₃, C₂F₅ oder C₃F₇ ist.

6. Verbindung nach Anspruch 5, ausgewählt aus der Gruppe, bestehend aus:
Si(CH₂CH₂SiCH₃(OCH₂CF₃)₂)₄;
Si(CH₂CH₂SiCH₃(OCH₂(CF₂)₂CF₃)₂)₄;
Si(OSi(CH₃)₂CH₂CH₂SiCH₃(OCH₂CF₃)₂)₄;
Si(OSi(CH₃)₂CH₂CH₂SiCH₃(OCH₂(CF₂)₂CF₃)₂)₄;
Si(OSi(CH₃)₂CH₂CH₂CH₂SiCH₃(OCH₂CF₃)₂)₄;
(CF₃CH₂O)₂CH₃SiCH₂CH₂(CF₂)₆CH₂CH₂SiCH₃(OCH₂CF₃)₂;
(CF₃(CF₂)₂CH₂O)₂CH₃SiCH₂CH₂(CF₂)₆CH₂CH₂SiCH₃(OCH₂-(CF₂)₂CF₃)₂;
(CF₃CH₂O)₂CH₃Si(CH₂)₆(CF₂)₆(CH₂)₆SiCH₃(OCH₂CF₃)₂;
Si(CH₂CH₂Si(CH₂CH₂CF₂CF₃)(OCH₂CF₃)₂)₄;
Si(CH₂CH₂Si(CH₂CH₂CF₂CF₃)(OCH₂(CF₂)₂CF₃)₂)₄;
Si(OSi(CH₃)₂CH₂CH₂Si(CH₂CH₂CF₂CF₃)(OCH₂CF₃)₂)₄
Si(OSi(CH₃)₂CH₂CH₂Si(CH₂CH₂CF₂CF₃)(OCH₂(CF₂)₂CF₃)₂)₄;
Si(OSi(CH₃)₂CH₂CH₂CH₂Si(CH₂CH₂CF₂CF₃)(OCH₂CF₃)₂)₄;
(CF₃CH₂O)₂(CF₃CF₂CH₂CH₂)SiCH₂CH₂(CF₂)₆CH₂CH₂Si(CH₂-CH₂CF₂CF₃)(OCH₂CF₃)₂;
(CF₃(CF₂)₂CH₂O)₂(CF₃CF₂CH₂CH₂)SiCH₂CH₂(CF₂)₆CH₂CH₂-Si(CH₂CH₂CF₂CF₃)(OCH₂(CF₂)₂CF₃)₃;
(CF₃CH₂O)₂(CF₃CF₂CH₂CH₂)Si(CH₂)₆(CF₂)₆(CH₂)₆Si(CH₂CH₂-CF₂CF₃)(OCH₂CF₃)₂; und
Cyclo-((CH₃)(CF₃CH₂O)₂CH₃SiCH₂CH₂)SiO)₄;
Cyclo-((CH₃)(CF₃CH₂O)₂CH₃SiCH₂CH₂CH₂)SiO)₄;
Cyclo-((CH₃)(CF₃CH₂O)₂CH₃SiCH₂CH₂CH₂)SiO)₅; und
Cyclo-((CH₃)(CF₃(CF₂)₂CH₂O)₂SiCH₂CH₂)SiO)₄-

7. Verbindung der Formel
Si[(CH₂)_{f}Si(CH₃)_{3-d}((CH₂)ₑSi(OR¹⁰))_{d}]₄, II
wobei:
d 1, 2 oder drei ist;
e eine ganze Zahl von 2 bis 10 darstellt;
f eine ganze Zahl von 2 bis 10 darstellt;
R¹⁰ C₁- bis C₈-Alkyl oder CₐH₂ₐR_{f} ist;
R_{f} bis zu 18 Kohlenstoffatome aufweist und aus der Gruppe ausgewählt ist, bestehend aus:
(a) C₁- bis C₁₈-Perfluoralkyl;
(b) -[CF₂CF(CF₃)O]ᵣ-CF₂-CF₂-CF₃, wobei r eine ganze Zahl von mindestens 1 ist;
(c) -CF₂-(CF₂-O)_{q}-CF₃, wobei q eine ganze Zahl von mindestens 2 ist; und
(d) -CH₂-C(CF₃)₂-CF₂-CF₂-CF₃;
wobei bis zu 50% des Fluors der R_{f}-Gruppe fakultativ mit Wasserstoff substituiert sind.
a eine ganze Zahl von 1 bis etwa 10 darstellt.

8. Verbindung nach Anspruch 7, wobei R¹⁰ CₐH₂ₐR_{f} darstellt.

9. Verbindung nach Anspruch 8, ausgewählt aus der Gruppe, bestehend aus:
Si(CH₂CH₂CH₂Si(CH₃)₂CH₂CH₂CH₂Si(OCH₂CH₃)₃)₄;
Si(CH₂CH₂CH₂Si(CH₃)₂CH₂CH₂CH₂Si(OCH₂CF₃)₃)₄;
Si(CH₂CH₂CH₂SiCH₃(CH₂CH₂CH₂Si(OCH₂CH₃)₃)₂)₄;
Si(CH₂CH₂CH₂SiCH₃(CH₂CH₂CH₂Si(OCH₂CF₃)₃)₂)₄; und
Si(CH₂CH₂CH₂Si(CH₂CH₂CH₂Si(OCH₂CF₃)₃)₃)₄.

10. Oligomere Verbindung mit der Formel
Si(OCₐH₂ₐR_{f})_{4-z}O_{z/2}, III
wobei:
z eine Zahl von 0,5 bis 3,0 darstellt;
a eine ganze Zahl von 1 bis 10 darstellt; und
R_{f} bis zu 18 Kohlenstoffatome aufweist und aus der Gruppe ausgewählt ist, bestehend aus:
(a) C₁- bis C₁₈-Perfluoralkyl;
(b) -[CF₂CF(CF₃)O]ᵣ-CF₂-CF₂-CF₃, wobei r eine ganze Zahl von mindestens 1 ist;
(c) -CF₂-(CF₂-O)_{q}-CF₃, wobei q eine ganze Zähl von mindestens 2 ist; und
(d) -CH₂-C(CF₃)₂-CF₂-CF₂-CF₃;
worin bis zu 50% des Fluors der R_{f}-Gruppe fakultativ mit Wasserstoff substituiert sind:

11. Verbindung nach Anspruch 10, wobei R_{f} CF₃, C₂F₅ oder C₃F₇ darstellt und a 1 oder 2 ist.

12. Oligomere Verbindung der Formel:
R_{f}-(CH₂)_{y}-Si(OR¹⁴)_{3-z}O_{z/2},
wobei:
z eine Zahl von 0,5 bis 2,5 darstellt;
y eine ganze Zahl von 2 bis 10 darstellt;
jedes R¹⁴ unabhängig C₁- bis C₈-Alkyl, C₁- bis C₁₀-Carboxy, C₁- bis C₁₀-Fluorcarboxy oder CₐH₂ₐR_{f} darstellt;
a eine ganze Zahl von 1 bis 10 darstellt; und
R_{f} bis zu 18 Kohlenstoffatome aufweist und aus der Gruppe ausgewählt ist, bestehend aus:
(a) C₁- bis C₁₈-Perfluoralkyl;
(b) -[CF₂CF(CF₃)O]ᵣ-CF₂-CF₂-CF₃, wobei r eine ganze Zahl von mindestens 1 darstellt;
(c) -CF₂-(CF₂-O)_{q}-CF₃, wobei q eine ganze Zahl von mindestens 2 darstellt; und
(d) -CH₂-C(CF₃)₂-CF₂-CF₂-CF₃;
wobei bis zu 50% des Fluors der R_{f}-Gruppe fakultativ mit Wasserstoff substituiert sind.

13. Oligomere Verbindung nach Anspruch 1, wobei R_{f} C₆F₁₃, n-C₈F₁₇ oder n-C₁₀F₂₁ darstellt und a 1 oder 2 ist.

## Revendications

1. Composé présentant la formule
X(Si(OCₐH₂ₐR_{f})₃)ₙ I
dans laquelle :
X est au moins une liaison organique sélectionnée dans le groupe constitué de :
(a) R¹ₘSiY₄₋ₘ;
(b) des structures cycliques 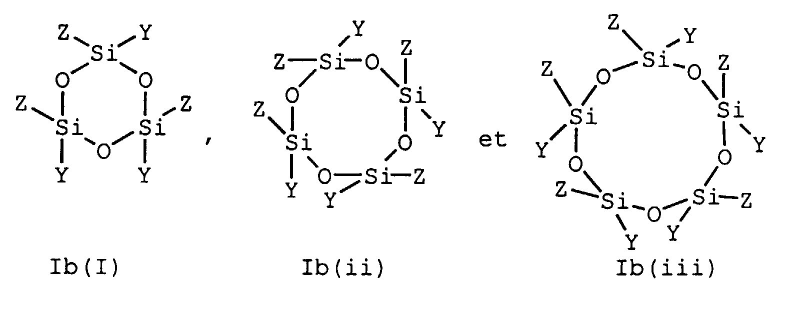
(c) R¹ₘSi(OSi(CH₃)₂Y)₄₋ₘ;
(d) CH₃SiY₂OSiY₂CH₃;
(e) Y₃SiOSiY₃;
(f) Y₂(CH₃)Si(CH₂)_{b}Si(CH₃)Y₂;
(g) Y₃Si(CH₂)_{b}SiY₃;
(h) Y₃SiC₆H₄SiY₃;
(i) un benzène substitué, y compris tous les isomères, sélectionné dans le groupe constitué de :
(i) C₆H₃(SiZ_{3-c}Y_{c})₃;
(ii) C₆H₂(SiZ_{3-c}Y_{c})₄;
(iii) C₆H(SiZ_{3-c}Y_{c})₅, et
(iv) C₆(SiZ_{3-c}Y_{c})₆, et
(j) un cyclohexane substitué, y compris tous les stéréoisomères, sélectionné dans le groupe constitué de :
(i) 1,2-C₆H₁₀(Y)₂; 1,3-C₆H₁₀(Y)₂;
1,4-C₆H₁₀(Y)₂;
(ii) 1,2,4-C₆H₉(Y)₃; 1,2,3-C₆H₉(Y)₃;
1,3,5-C₆H₉(Y)₃;
(iii) 1,2,3,4-C₆H₈(Y)₄;
1,2,4,5-C₆H₈(Y)₄;
1,2,3,5-C₆H₈(Y)₄;
(iv) 1,2,3,4,5-C₆H₇(Y)₅,et
(v) C₆H₆(Y)₆, et
(k) Y(CF₂)ᵥY
R_{f} présente jusqu'à 18 atomes de carbone et est sélectionné dans le groupe constitué de :
(a) un perfluoroalkyle en C₁ à C₁₈;
(b) -[CF₂CF(CF₃)O]ᵣ-CF₂-CF₂-CF₃, dans laquelle r est un entier au moins égal a 1;
(c) -CF₂-(CF₂-O)_{q}-CF₃; dans laquelle q est un entier au moins égal à 2, et
(d) -CH₂-C(CF₃)₂-CF₂-CF₂-CF₃;
dans laquelle jusqu'à 50% du fluor du groupement R_{f} sont facultativement remplacés par un hydrogène;
a est un entier de 1 à 10;
b est un entier de 1 à 10;
c est 1, 2 ou 3;
m est 0, 1 ou 2;
n est un entier supérieur ou égal à 2;
v est un entier pair de 2 à 14;
R¹ est un alkyle en C₁ à C₈ ou un aryle;
Y est -(CR²R³)ₖCR⁴R⁵CR⁶R⁷(CR⁸R⁹)ₕ-
R² à R⁹ sont chacun indépendamment un hydrogène, un alkyle en C₁ à environ C₈, ou un aryle, à condition qu'au moins un des R⁴ à R⁷ soit un hydrogène;
k et h sont chacun indépendamment un entier de 0 à 10, à condition qu'au moins un de k ou h soit égal à zéro, et
Z est un alkyle en C₁ à C₄, du 3,3,3-trifluoropropyle, un arylalkyle ou un aryle.

2. Composé suivant la revendication 1 dans lequel X est sélectionné dans le groupe constitué de : R¹ₘSiY₄₋ₘ; 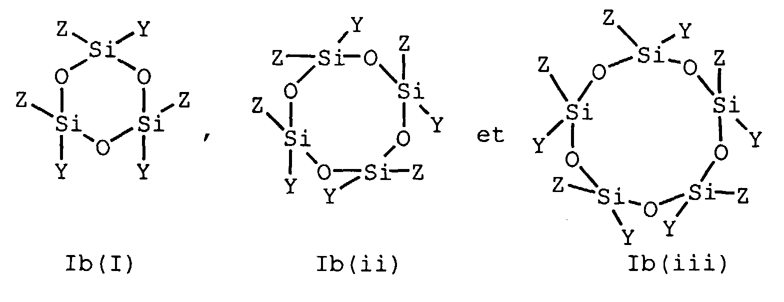 R¹ₘSi(OSi(CH₃)₂Y)₄₋ₘ et Y(CF₂)ᵥY, et R_{f} est CF₃, C₂F₅ ou C₃F₇.

3. Composé suivant la revendication 2, sélectionné dans le groupe constitué de :
Si(CH₂CH₂Si(OCH₂CF₃)₃)₄;
Si(CH₂CH₂Si(OCH₂CF₂CF₃)₃)₄;
Si(CH₂CH₂Si(OCH₂(CF₂)₂CF₃)₃)₄;
Si(OSi(CH₃)₂CH₂CH₂Si(OCH₂CF₃)₃)₄;
Si(OSi(CH₃)₂CH₂CH₂Si(OCH₂(CF₂)₂CF₃)₃)₄;
Si(OSi(CH₃)₂CH₂CH₂CH₂Si(OCH₂CF₃)₃)₄;
cyclo-((CH₃)(CF₃CH₂O)₃SiCH₂CH₂)SiO)₄;
cyclo-((CH₃)(CF₃CH₂O)₃SiCH₂CH₂CH₂)SiO)₄;
cyclo-((CH₃)(CF₃CH₂O)₃SiCH₂CH₂CH₂)SiO)₅;
cyclo-((CH₃(CF₃(CF₂)₂CH₂O)₃SiCH₂CH₂)SiO)₄;
(CF₃CH₂O)₃SiCH₂CH₂(CF₂)₆CH₂CH₂Si(OCH₂CF₃)₃;
(CF₃(CF₂)₂CH₂O)₃SiCH₂CH₂(CF₂)₆CH₂CH₂Si(OCH₂(CF₂)₂CF₃)₃, et
(CF₃CH₂O)₃Si(CH₂)₆(CF₂)₆(CH₂)₆Si(OCH₂CF₃)₃.

4. Composé présentant la formule I
X(R¹⁰Si(OCₐH₂ₐR_{f})₂)ₙ IA
dans laquelle :
X est au moins une liaison organique sélectionnée dans le groupe constitué de :
(a) R¹ₘSiY₄₋ₘ;
(b) des structures cycliques 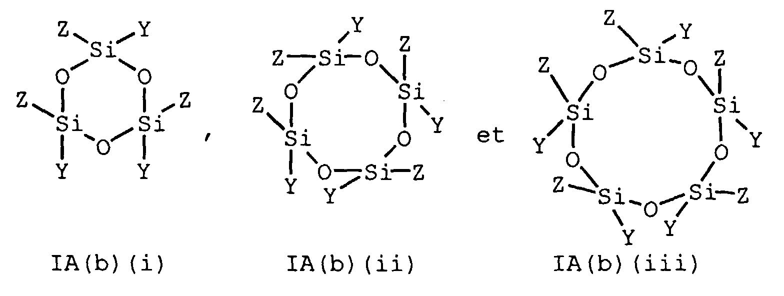
(c) R¹ₘSi(OSi(CH₃)₂Y)₄₋ₘ;
(d) CH₃SiY₂OSiY₂CH₃;
(e) Y₃SiOSiY₃;
(f) Y₂(CH₃)Si(CH₂)_{b}Si(CH₃)Y₂;
(g) Y₃Si(CH₂)_{b}SiY₃;
(h) Y₃SiC₆H₄SiY₃; (i) un benzène substitué, y compris tous les isomères, sélectionné dans le groupe constitué de :
(i) C₆H₃(SiZ_{3-c}Y_{c})₃;
(ii) C₆H₂(SiZ_{3-c}Y_{c})₄;
(iii) C₆H(SiZ_{3-c}Y_{c})₅, et
(iv) C₆(SiZ_{3-c}Y_{c})₆, et
(j) un cyclohexane substitué, y compris tous les stéréoisomères, sélectionné dans le groupe constitué de :
(i) 1,2-C₆H₁₀(Y)₂; 1,3-C₆H₁₀(Y)₂;
1,4-C₆H₁₀(Y)₂;
(ii) 1,2,4-C₆H₉(Y)₃; 1,2,3-C₆H₉(Y)₃;
1,3,5-C₆H₉(Y)₃;
(iii) 1,2,3,4-C₆H₈(Y)₄;
1,2,4,5-C₆H₈(Y)₄;
1,2,3,5-C₆H₈(Y)₄;
(iv) 1,2,3,4,5-C₆H₇(Y)₅, et (v) C₆H₆(Y)₆,
R_{f} présente jusqu'à 18 atomes de carbone et est sélectionné dans le groupe constitué de :
(a) un perfluoroalkyle en C₁ à C₁₈;
(b) -[CF₂CF(CF₃)O]ᵣ-CF₂-CF₂-CF₃, dans laquelle r est un entier au moins égal à 1;
(c) -CF₂-(CF₂-O)_{q}-CF₃, dans laquelle q est un entier au moins égal à 2, et
(d) -CH₂-C(CF₃)₂-CF₂-CF₂-CF₃;
chaque R_{f} étant substitué facultativement par un ou plusieurs hydrogènes;
Z est un alkyle en C₁ à C₄, du 3,3,3-trifluoropropyle, un arylalkyle ou un aryle;
Y est -(CR²R³)ₖCR⁴R⁵CR⁶R⁷(CR⁸R⁹)ₕ-;
R¹ est un alkyle en C₁ à C₈ ou un aryle;
R² à R⁹ sont chacun indépendamment un hydrogène, un alkyle en C₁ à C₈ ou un aryle, à condition qu'au moins un des R⁴ à R⁷ soit un hydrogène;
R¹⁰ est un alkyle en C₁ à C₈ ou CₐH₂ₐR_{f};
m est 0, 1 ou 2;
k et h sont chacun indépendamment un entier de 0 à 10, à condition qu'au moins un de k ou h soit égal à zéro;
a est un entier de 1 à 10;
b est un entier de 1 à 10;
c est 1, 2 ou 3, et
n est un entier supérieur ou égal à 2.

5. Composé suivant la revendication 4, dans lequel X est sélectionné dans le groupe constitué de : de : R¹ₘSiY₄₋ₘ; 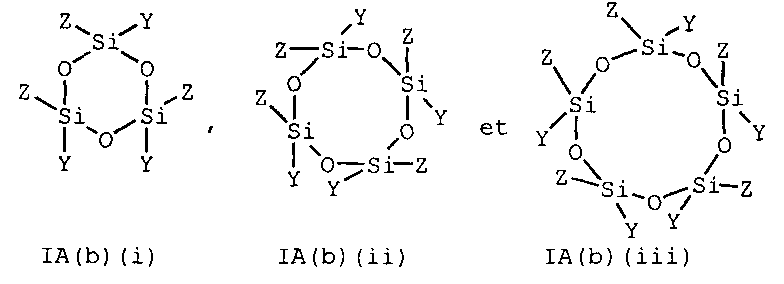 R¹ₘSi(OSi(CH₃)₂Y)₄₋ₘ et Y(CF₂)ᵥY, et R_{f} est CF₃, C₂F₅ ou C₃F₇.

6. Composé suivant la revendication 5, sélectionné dans le groupe constitué de :
Si(CH₂CH₂SiCH₃(OCH₂CF₃)₂)₄;
Si(CH₂CH₂SiCH₃(OCH₂(CF₂)₂CF₃)₂)₄;
Si(OSi(CH₃)₂CH₂CH₂SiCH₃(OCH₂CF₃)₂)₄;
Si(OSi(CH₃)₂CH₂CH₂SiCH₃(OCH₂(CF₂)₂CF₃)₂)₄;
Si(OSi(CH₃)₂CH₂CH₂CH₂SiCH₃(OCH₂CF₃)₂)₄;
(CF₃CH₂O)₂CH₃SiCH₂CH₂(CF₂)₆CH₂CH₂SiCH₃(OCH₂CF₃)₂;
(CF₃(CF₂)₂CH₂O)₂CH₃SiCH₂CH₂(CF₂)₆CH₂CH₂SiCH₃(OCH₂-(CF₂)₂CF₃)₂;
(CF₃CH₂O)₂CH₃Si(CH₂)₆(CF₂)₆(CH₂)₆SiCH₃(OCH₂CF₃)₂;
Si(CH₂CH₂Si(CH₂CH₂CF₂CF₃)(OCH₂CF₃)₂)₄;
Si(CH₂CH₂Si(CH₂CH₂CF₂CF₃)(OCH₂(CF₂)₂CF₃)₂)₄;
Si(OSi(CH₃)₂CH₂CH₂Si(CH₂CH₂CF₂CF₃)(OCH₂CF₃)₂)₄;
Si(OSi(CH₃)₂CH₂CH₂Si(CH₂CH₂CF₂CF₃)(OCH₂(CF₂)₂CF₃)₂)₄;
Si(OSi(CH₃)₂CH₂CH₂CH₂Si(CH₂CH₂CF₂CF₃)(OCH₂CF₃)₂)₄;
(CF₃CH₂O)₂(CF₃CF₂CH₂CH₂)SiCH₂CH₂(CF₂)₆CH₂CH₂Si(CH₂-CH₂CF₂CF₃)(OCH₂CF₃)₂;
(CF₃(CF₂)₂CH₂O)₂(CF₃CF₂CH₂CH₂)SiCH₂CH₂(CF₂)₆CH₂CH₂-Si(CH₂CH₂CF₂CF₃)(OCH₂(CF₂)₂CF₃)₃;
(CF₃CH₂O)₂(CF₃CF₂CH₂CH₂)Si(CH₂)₆(CF₂)₆(CH₂)₆Si(CH₂CH₂-CF₂CF₃)(OCH₂CF₃)₂, et
cyclo-((CH₃)(CF₃CH₂O)₂CH₃SiCH₂CH₂)SiO)₄;
cyclo-((CH₃)(CF₃CH₂O)₂CH₃SiCH₂CH₂CH₂)SiO)₄;
cyclo-((CH₃)(CF₃CH₂O)₂CH₃SiCH₂CH₂CH₂)SiO)₅, et
cyclo-((CH₃)(CF₃(CF₂)₂CH₂O)₂SiCH₂CH₂)SiO)₄.

7. Composé présentant la formule
Si[(CH₂)_{f}Si(CH₃)_{3-d}((CH₂)ₑSi(OR¹⁰))_{d}]₄ II
dans laquelle :
d est 1, 2 ou 3;
e est un entier de 2 à 10;
f est un entier de 2 à 10;
R¹⁰ est un alkyle en C₁ à C₈ ou CₐH₂ₐR_{f};
R_{f} présente jusqu'à 18 atomes de carbone et est sélectionné dans le groupe constitué de :
(a) un perfluoroalkyle en C₁ à C₁₈;
(b) -[CF₂CF(CF₃)O]ᵣ-CF₂-CF₂-CF₃, dans laquelle r est un entier au moins égal à 1;
(c) -CF₂-(CF₂-O)_{q}-CF₃; dans laquelle q est un entier au moins égal à 2, et
(d) -CH₂-C(CF₃)₂-CF₂-CF₂-CF₃;
dans laquelle jusqu'à 50% du fluor du groupement R_{f} sont facultativement remplacés par un hydrogène;
a est un entier de 1 à environ 10.

8. Composé suivant la revendication 7, dans lequel R¹⁰ est CₐH₂ₐR_{f}.

9. Composé suivant la revendication 8, sélectionné dans le groupe constitué de :
Si(CH₂CH₂CH₂Si(CH₃)₂CH₂CH₂CH₂Si(OCH₂CH₃)₃)₄;
Si(CH₂CH₂CH₂Si(CH₃)₂CH₂CH₂CH₂Si(OCH₂CF₃)₃)₄;
Si(CH₂CH₂CH₂SiCH₃(CH₂CH₂CH₂Si(OCH₂CH₃)₃)₂)₄;
Si(CH₂CH₂CH₂SiCH₃(CH₂CH₂CH₂Si(OCH₂CF₃)₃)₂)₄, et
Si(CH₂CH₂CH₂Si(CH₂CH₂CH₂Si(OCH₂CF₃)₃)₃)₄.

10. Composé oligomère présentant la formule
Si(OCₐH₂ₐR_{f})_{4-z}O_{z/2} III
dans laquelle :
z est un nombre de 0,5 à 3,0;
a est un entier de 1 à 10, et
R_{f} présente jusqu'à 18 atomes de carbone et est sélectionné dans le groupe constitué de :
(a) un perfluoroalkyle en C₁ à C₁₈;
(b) -[CF₂CF(CF₃)O]ᵣ-CF₂-CF₂-CF₃, dans laquelle r est un entier au moins égal à 1;
(c) -CF₂-(CF₂-O)_{q}-CF₃, dans laquelle q est un entier au moins égal à 2, et
(d) -CH₂-C(CF₃)₂-CF₂-CF₂-CF₃;
dans laquelle jusqu'à 50% du fluor du groupement R_{f} sont facultativement remplacés par un hydrogène.

11. Composé suivant la revendication 10, dans lequel R_{f} est CF₃, C₂F₅, ou C₃F₇, et a est 1 ou 2.

12. Composé oligomère présentant la formule
R_{f}-(CH₂)_{y}-Si(OR¹⁴)_{3-z}O_{z/2} IV
dans laquelle :
z est un nombre de 0,5 à 2,5;
y est un entier de 2 à 10,
chaque R¹⁴ est indépendamment un alkyle en C₁ à C₈,
un carboxyle en C₁ à C₁₀, un fluorocarboxyle en C₁ à C₁₀ ou CₐH₂ₐR_{f};
a est un entier de 1 à 10, et
R_{f} présente jusqu'à 18 atomes de carbone et est sélectionné dans le groupe constitué de :
(a) un perfluoroalkyle en C₁ à C₁₈;
(b) -[CF₂CF(CF₃)O]ᵣ-CF₂-CF₂-CF₃, dans laquelle r est un entier au moins égal à 1;
(c) -CF₂-(CF₂-O)_{q}-CF₃, dans laquelle q est un entier au moins égal à 2, et
(d) -CH₂-C(CF₃)₂-CF₂-CF₂-CF₃;
dans laquelle jusqu'à 50% du fluor du groupement R_{f} sont facultativement remplacés par un hydrogène.

13. Composé oligomère suivant la revendication 12, dans lequel R_{f} est C₆F₁₃, n-C₈F₁₇ ou n-C₁₀F₂₁ et a est 1 ou 2.
